# EUROPEAN PATENT APPLICATION

(11) **EP 4 611 410 A1**
(43) Date of publication of application: **03.09.2025**
(21) Application number: 22963763.2
(22) Date of filing: 31.10.2022
(51) Int. Cl.: H04W 12/00

(54) **COMMUNICATION METHOD AND APPARATUS**

(71) Applicant: Huawei Technologies Co., Ltd., Shenzhen, Guangdong 518129 (CN)
(72) Inventor: LIU, Fei, Shenzhen, Guangdong 518129 (CN); SONG, Yurong, Shenzhen, Guangdong 518129 (CN); WANG, Donghui, Shenzhen, Guangdong 518129 (CN)
(74) Representative: Körber, Martin Hans
(86) International application number: PCT/CN2022/128747
(87) International publication number: WO 2024/092443

(57) **Abstract**

This application provides a communication method. The method includes: A first security module may execute a secure and trusted service or manage the first security module based on a request of a communication node or a request of a security module serving another communication node, and feed back an execution result or a management result to a requester. In this way, a security function and a management function are opened to different communication nodes, procedures of the security function are standardized, and the security function is modularized. This facilitates independent deployment, flexible expansion, and convenient maintenance of the security function.

## Description

### TECHNICAL FIELD

This application relates to the communication field, and more specifically, to a communication method and a communication apparatus.

### BACKGROUND

Communication network security technologies are interdisciplinary technologies of a communication network and security. Security capabilities of the communication network are usually closely coupled with other network capabilities, and security messages are embedded in control plane messages. For example, access authentication and key agreement are embedded in a user registration procedure, terminal-side security capability reporting is embedded in a terminal capability reporting set, and private network authentication is embedded in a private network access procedure. Close coupling between security and communication capabilities ensures effective utilization of network resources.

With development of communication technologies, when communication network technologies are closely coupled with security technologies, a situation in which communication dominates while security assists is directly caused. Consequently, development of the security capabilities in the communication network is subject to many restrictions. For example, due to close coupling between security protocols and other protocols, modification on the security protocols usually involves a plurality of network functions in a procedure. When network functions need to be modified, it is difficult to objectively describe necessity of security reconstruction unless vulnerabilities have been clearly identified in the industry. When network vulnerabilities are exploited, and attacks are about to occur or have occurred, it is challenging to quickly upgrade security capabilities because security capabilities embedded in different network functions are different from each other.

Therefore, when the security technologies serve the communication network, how to decouple, independently of the communication network, a security function from a communication function through continuous evolution and update becomes a problem worthy of attention.

### SUMMARY

This application provides a communication method and a communication apparatus, so that an independent security function can be deployed, to enable an independent security service in a communication node, thereby ensuring independent update and maintenance of the security function, and improving communication security performance.

According to a first aspect, a communication method is provided. The method may be performed by a first security module. The first security module may be a security function unit, module, or device, may be a chip or a circuit in a security function unit, module, or device, or may be a logical module or software that can implement all or some security functions. This is not limited in this application.

The method includes: The first security module executes a first security service or manages the first security module based on a first request message sent by a requester, where the first security service is used to call a security capability, the requester includes a first node, a second node, or a second security module, the first security module is a module serving the first node, and the second security module is a module serving the second node; and the first security module sends a first feedback message to the requester, where the first feedback message is used to feed back, to the requester, an execution result or a management result of the first security service.

In this application, the first security module and the second security module are security function modules serving different communication nodes.

In this application, the first security module may further execute the first security service or manage the first security module based on a first notification message received from the requester. The first notification message may be status change notification information of the requester. For example, a terminal device accesses an access network device.

In this application, the first security module may alternatively autonomously trigger execution of the first security service or management of the first security service. For example, the first security module executes the first security service based on a first period, or the first security module executes the first security service based on a first timer.

The first period or the first timer may be preset.

For example, the first security module may periodically upload data to a blockchain.

A periodic trusted service request corresponds to a conventional network in which authentication is periodically triggered, thereby improving security.

In this application, when the requester is the first node, the first request message includes an identifier of the second node, to indicate a destination node of a trusted service, for example, indicate a to-be-authenticated party in an authentication service or an attester in a trusted attestation service.

In this application, when the requester is the second security module, the first request message includes a security parameter that is used by the first security module to execute a specific security algorithm, for example, an authentication vector carried in a UE authentication request sent by the first security module on an access and mobility management function (Access and Mobility Management Function, AMF) side to the second security module on a terminal side in an authentication service.

In this application, when the requester is the second node, the first security module may obtain a security parameter that needs to be input for a security algorithm. For example, an input parameter used by the first security module to execute a specific security algorithm is preset or may be directly obtained by the first security module. For example, in a trusted attestation service, a blockchain timestamp may be used as a challenge value in the trusted attestation service, and the first security module inputs the challenge value as a parameter of the security algorithm.

In this application, when the requester is the first node, the first request message may include management requirement information. The management requirement information may be understood as a security requirement of the first node. The first security module manages the first security module based on the management requirement information.

In this application, when the requester is the second security module, the first request message may include management target information. The management target information may be understood as a management target of the first security module, for example, establishment, deletion, and status setting of the first security module, or managing a capability unit in the first security module, updating a profile based on adjustment on the capability unit, and the like.

According to the communication method provided in this application, the first security module may execute a secure and trusted service or manage the first security module based on a request of a communication node or a request of a security module serving another communication node, and feed back an execution result or a management result to the requester. In this way, a security function is opened to different communication nodes, procedures of the security function are standardized, and the security function is modularized. This facilitates independent deployment, flexible expansion, and convenient maintenance of the security function.

With reference to the first aspect, in some implementations of the first aspect, the requester is the first node, and the first request message includes the identifier of the second node or the management requirement information of the first node.

Based on the foregoing technical solution, in this application, when requesting a security service, the communication node may add, to a request message, an identifier of a destination node of a trusted service. The first security module may determine, based on the identifier of the destination node of the trusted service, a trusted policy corresponding to the identifier, and further determine a specific security algorithm and a used security parameter according to the trusted policy. However, in the conventional technology, when a communication node requests a security function, a preprocessing result of the communication node is required, for example, calculation of a security algorithm or obtaining of a security parameter. Therefore, processing of the first node is simplified, and transmission of the security parameter is protected.

In addition, in this application, when requesting a security service, the communication node may further add a management requirement, for example, a security requirement list, to the request message. The first security module adjusts the capability unit of the first security module based on a specific security requirement, to meet a security requirement proposed by the first node.

With reference to the first aspect, in some implementations of the first aspect, the requester is the second security module, and the first request message includes the security parameter or the management target information of the first security module.

Based on the foregoing technical solution, in this application, when requesting a security service, the communication node may further add, to a request message, a management target, for example, a name of a managed capability unit; and the first security module manages the first security module based on the specific management target, to meet a security requirement proposed by the first node.

With reference to the first aspect, in some implementations of the first aspect, the first security module includes a first module and/or a second module, the first module is configured to perform at least one of the following operations: calling a security algorithm, obtaining a security parameter, or requesting a second security service from the second security module, and the second module is configured to manage the first security service or the first module.

Based on the foregoing solution, the two types of the first security module may be respectively configured to execute a security service or a management service.

With reference to the first aspect, in some implementations of the first aspect, the first security module includes a scheduling unit and a capability unit, and the first request message includes the identifier of the second node; and that the first security module executes the first security service includes: The scheduling unit calls a security algorithm of the first security service and/or obtains a parameter of the first security service based on the first request message through the capability unit.

Based on the foregoing solution, the scheduling unit in the first security module may call an applicable security algorithm or security parameter by calling the capability unit, to execute the first security service.

With reference to the first aspect, in some implementations of the first aspect, the first security module further includes an interface unit, and the method further includes: The interface unit receives the first request message from the requester, where the first request message includes the first security service requested by the requester; the interface unit generates a first task queue based on the first request message, and sends the first task queue to the scheduling unit; the scheduling unit calls the security algorithm of the first security service and/or obtains the parameter of the first security service based on the first task queue through the capability unit; and the scheduling unit sends an execution result to the interface unit.

According to the foregoing technical solution, different function units in the first security module may implement different functions, to execute the first security service.

With reference to the first aspect, in some implementations of the first aspect, the first security module includes a scheduling unit, a management unit, and a capability unit, and the first request message includes the management requirement information of the first node or the management target information of the first security module; and that the first security module manages the first security module includes: The management unit manages the capability unit based on the first request message through the scheduling unit.

According to the foregoing technical solution, the first security module may manage the capability unit through the management unit, so that an internal capability unit is pluggable, and different capability units may be deployed and installed based on a requirement of the communication node. This improves flexibility and applicability of the first security module.

With reference to the first aspect, in some implementations of the first aspect, the first security module further includes an interface unit, and the method further includes: The interface unit receives the first request message from the requester, and sends the first request message to the scheduling unit; the scheduling unit sends the first request message to the management unit; the management unit manages the capability unit based on the first request message through the scheduling unit; the management unit modifies a profile, and sends a management response message to the interface unit through the scheduling unit; and the interface unit sends a management response message to the requester, where the management response message is used to feed back a management result of a management request to the requester.

According to the foregoing technical solution, in the first security module, the management unit may manage the capability unit through the scheduling unit based on a management request message received by the interface unit, and further modifies the profile and sends the management result to the interface unit, so that update management of the internal capability unit can be implemented, and different capability units may be deployed and installed based on a requirement of the communication node. This improves flexibility and applicability of the first security module.

With reference to the first aspect, in some implementations of the first aspect, when the first module serves the requester, the requester is a terminal device, and the first module is deployed in the requester, or the first module is deployed outside the requester.

According to the foregoing technical solution, the first module may be deployed inside or outside the terminal device. Therefore, deployment is flexible, and applicability is improved.

With reference to the first aspect, in some implementations of the first aspect, when the first module and/or the second module serve the requester, the requester is an access network device, and the first module and/or the second module are/is deployed in the requester, or the first module and/or the second module are/is deployed outside the requester.

According to the foregoing technical solution, the first module or the second module may be deployed inside the access network device and integrated with the access network device, or may be deployed outside the access network device and independently deployed, but may still provide a security service for the access network device.

With reference to the first aspect, in some implementations of the first aspect, when the first module serves the requester, the requester is a core network device, and the first module and the second module are deployed as network functions of a core network.

With reference to the first aspect, in some implementations of the first aspect, the first security module communicates with the requester through a first interface, the first interface is used by the requester to initiate a request for the first security service, and the first interface is further used by the first security module to send a response for executing the first security service; and when the first security module serves the requester, the first interface is further used by the requester to initiate a request for management and configuration of the first security module, and the first interface is further used by the first security module to send a response to management and configuration of the first security module.

According to the foregoing technical solution, a communication interface is provided, and may be used by the first security module in this application to communicate with a communication node, to decouple a security and trusted capability from another capability at a communication network end and on both sides of a network, and standardize an external interface.

With reference to the first aspect, in some implementations of the first aspect, the second module communicates with the first module through a second interface, the second interface is configured to transmit a request and a response of the first security service, and the second interface is further configured to transmit a request and a response of the second module to management and configuration of the first module.

According to the foregoing technical solution, a communication interface is provided, and may be used for communication between first security modules in this application, to decouple a security and trusted capability on two sides of different security modules from another capability, and standardize an external interface.

According to a second aspect, a communication method is provided. The method may be performed by a requester. The requester may be a terminal device, an access network device, or a security module (a second security module), may be a chip or a circuit in a terminal device, an access network device, or a security module, or may be a logical module or software that can implement all or some functions of a terminal device, an access network device, or a security module. This is not limited in this application.

The method includes: The requester sends a first request message to a first security module, where the first request message is used to request the first security module to execute a first security service or manage the first security module, the first security service is used to call a security capability, the requester includes a first node, a second node, or a second security module, the first security module is a module serving the first node, and the second security module is a module serving the second node; and the requester receives a first feedback message from the first security module, where the first feedback message is used to feed back, to the requester, an execution result of the first security service or a management result of the first security module.

According to the communication method provided in this application, the requester that has a trusted service or a security module management requirement sends a request to the first security module, and sends, to the first security module, an identifier of a target node of the trusted service or a security parameter; and the first security module may execute the trusted service based on the identifier or the security parameter, and feed back an execution result of the trusted service to the requester. In this process, the requester can directly obtain a result of the trusted service without participating in calculation and processing. This simplifies a processing procedure of the requester, and ensures communication security.

With reference to the second aspect, in a possible implementation, the requester is the first node, and the first request message includes an identifier of the second node or management requirement information of the first node.

With reference to the second aspect, in a possible implementation, the requester is the second security module, and the first request message includes a security parameter or management target information of the first security module.

According to a third aspect, a communication apparatus is provided. The apparatus may be a first security module. The first security module may be a security function unit, module, or device, may be a chip or a circuit in a security function unit, module, or device, or may be a logical module or software that can implement all or some security functions. This is not limited in this application.

The apparatus includes: a processing unit, configured to execute a first security service or manage the first security module based on a first request message sent by a requester, where the first security service is used to call a security capability, the requester includes a first node, a second node, or a second security module, the first security module is a module serving the first node, and the second security module is a module serving the second node; and an interface unit, configured to send a first feedback message to the requester, where the first feedback message is used to feed back, to the requester, an execution result or a management result of the first security service.

With reference to the third aspect, in some implementations of the third aspect, the requester is the first node, and the first request message includes an identifier of the second node or management requirement information of the first node.

With reference to the third aspect, in some implementations of the third aspect, the requester is the second security module, and the first request message includes a security parameter or management target information of the first security module.

With reference to the third aspect, in some implementations of the third aspect, the first security module includes a first module and/or a second module, the first module is configured to perform at least one of the following operations: calling a security algorithm, obtaining a security parameter, or requesting a second security service from the second security module, and the second module is configured to manage the first security service or the first module.

With reference to the third aspect, in some implementations of the third aspect, the processing unit includes a scheduling unit and a capability unit, the first request message includes the identifier of the second node, and the scheduling unit is configured to call a security algorithm of the first security service and/or obtain a parameter of the first security service based on the first request message through the capability unit.

With reference to the third aspect, in some implementations of the third aspect, the processing unit further includes the capability unit, and the interface unit is further configured to receive the first request message from the requester, where the first request message includes the first security service requested by the requester; the interface unit is further configured to: generate a first task queue based on the first request message, and send the first task queue to the scheduling unit; the scheduling unit is specifically configured to call the security algorithm of the first security service and/or obtain the parameter of the first security service based on the first task queue through the capability unit; and the scheduling unit is further configured to send an execution result to the interface unit.

With reference to the third aspect, in some implementations of the third aspect, the processing unit includes a scheduling unit, a management unit, and a capability unit, the first request message includes the management requirement information of the first node or the management target information of the first security module, and the management unit is specifically configured to manage the capability unit based on the first request message through the scheduling unit, where the management request message includes a management requirement or a management target of the requester.

With reference to the third aspect, in some implementations of the third aspect, the interface unit is further configured to: receive the first request message from the requester, and send the first request message to the scheduling unit; the scheduling unit is further configured to send the first request message to the management unit; the management unit is further configured to manage the capability unit based on the first request message through the scheduling unit; the management unit is further configured to: modify a profile, and send a management response message to the interface unit through the scheduling unit; and the interface unit is further configured to send the management response message to the requester, where the management response message is used to feed back a management result of a management request to the requester.

With reference to the third aspect, in some implementations of the third aspect, when the first module serves the requester, the requester is a terminal device, and the first module is deployed in the requester, or the first module is deployed outside the requester.

With reference to the third aspect, in some implementations of the third aspect, when the first module and/or the second module serve the requester, the requester is an access network device, and the first module and/or the second module are/is deployed in the requester, or the first module and/or the second module are/is deployed outside the requester.

With reference to the third aspect, in some implementations of the third aspect, when the first module and/or the second module serve/serves the requester, the requester is a core network device, and the first module and the second module are deployed as network functions of a core network.

With reference to the third aspect, in some implementations of the third aspect, the first security module communicates with the requester through a first interface, the first interface is used by the requester to initiate a request for the first security service, and the first interface is further used by the first security module to send a response for executing the first security service; and when the first security module serves the requester, the first interface is further used by the requester to initiate a request for management and configuration of the first security module, and the first interface is further used by the first security module to send a response to management and configuration of the first security module.

With reference to the third aspect, in some implementations of the third aspect, the second module communicates with the first module through a second interface, the second interface is configured to transmit a request and a response of the first security service, and the second interface is further configured to transmit a request and a response of the second module to management and configuration of the first module.

According to a fourth aspect, a communication apparatus is provided. The apparatus may be a requester. The requester may be a terminal device, an access network device, or a security module (a second security module), may be a chip or a circuit in a terminal device, an access network device, or a security module, or may be a logical module or software that can implement all or some functions of a terminal device, an access network device, or a security module. This is not limited in this application.

The apparatus includes: an interface unit, configured to send a first request message to a first security module, where the first request message is used to request the first security module to execute a first security service or manage the first security module, the first request message includes an identifier of a communication node or a security parameter, the first security service is used to call a security capability, and a requester includes the communication node or a second security module. The interface unit is further configured to receive a first feedback message from the first security module, where the first feedback message is used to feed back, to the requester, an execution result or a management result of the first security service.

According to a fifth aspect, a communication apparatus is provided. The apparatus includes a processor. The processor is coupled to a memory, and may be configured to execute instructions in the memory, to implement the method according to any one of the first aspect, the second aspect, and the possible implementations of the first aspect and the second aspect. Optionally, the apparatus further includes the memory. The memory and the processor may be separately deployed, or may be deployed in a centralized manner. Optionally, the apparatus further includes a communication interface, and the processor is coupled to the communication interface. In an implementation, the communication interface may be a transceiver or an input/output interface.

When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, and a signal output by the output circuit may be output to, but not limited to, a transmitter and transmitted by the transmitter. In addition, the input circuit and the output circuit may be a same circuit, and the circuit is used as the input circuit and the output circuit at different moments. Specific implementations of the processor and various circuits are not limited in this embodiment of this application.

According to a sixth aspect, a communication apparatus is provided. The apparatus includes a logic circuit and an input/output interface, and the logic circuit is configured to: be coupled to the input/output interface, and transmit data through the input/output interface, to perform the method according to any one of the first aspect, the second aspect, and the possible implementations of the first aspect and the second aspect.

According to a seventh aspect, a communication system is provided. The system includes the first module in any possible implementation of the first aspect or the second aspect.

According to an eighth aspect, a computer-readable storage medium is provided. The computer-readable storage medium stores a computer program (which may also be referred to as code or instructions), and when the computer program is run on a computer, the computer is enabled to perform the method according to any one of the first aspect, the second aspect, and the possible implementations of the first aspect and the second aspect.

According to a ninth aspect, a computer program product is provided. The computer program product includes a computer program (which may also be referred to as code or instructions), and when the computer program is run, a computer is enabled to perform the method according to any one of the first aspect, the second aspect, and the possible implementations of the first aspect and the second aspect.

According to a tenth aspect, a circuit system is provided, including a memory and a processor. The memory is configured to store a computer program, and the processor is configured to invoke the computer program from the memory, and run the computer program, to enable a communication device on which the circuit system is installed to perform the method in any possible implementation of the first aspect or the second aspect.

The circuit system may include an input circuit or interface configured to send information or data, and an output circuit or interface configured to receive information or data.

According to an eleventh aspect, a circuit system is provided, configured to perform the method in any possible implementation of the first aspect or the second aspect.

For beneficial effects brought by the third aspect to the eleventh aspect, refer to descriptions of beneficial effects in the first aspect and the second aspect. Details are not described herein again.

### BRIEF DESCRIPTION OF DRAWINGS

FIG. 1 is a diagram of a wireless communication system 100 applicable to embodiments of this application;
FIG. 2 is a diagram of a network architecture 200 applicable to embodiments of this application;
FIG. 3 is a diagram of a network architecture 300 applicable to embodiments of this application;
FIG. 4 is a diagram of a deployment architecture of a security module according to a specific embodiment of this application;
FIG. 5 is a diagram of a deployment architecture of a security module according to a specific embodiment of this application;
FIG. 6 is a diagram of a deployment architecture of a first security module according to a specific embodiment of this application;
FIG. 7 is a diagram of a communication interface according to a specific embodiment of this application;
FIG. 8 is a diagram of a communication interface according to a specific embodiment of this application;
FIG. 9 is a diagram of a communication interface according to a specific embodiment of this application;
FIG. 10 shows a communication procedure applicable to internal units in a security module according to a specific embodiment of this application;
FIG. 11 is an interaction diagram of a communication method applicable to a specific embodiment of this application;
FIG. 12 is another interaction diagram of a communication method applicable to a specific embodiment of this application;
FIG. 13 is still another interaction diagram of a communication method applicable to a specific embodiment of this application;
FIG. 14(a) and FIG. 14(b) are a flowchart of an authentication service according to a specific embodiment of this application;
FIG. 15(a) and FIG. 15(b) are a flowchart of a trusted attestation service according to a specific embodiment of this application;
FIG. 16(a)-1, FIG. 16(a)-2, and FIG. 16(b) are a flowchart of an authorization service according to a specific embodiment of this application;

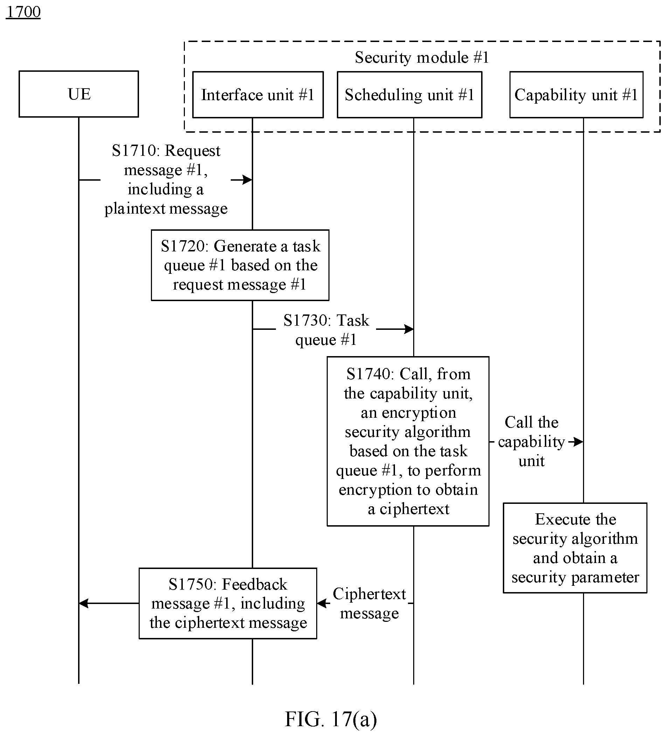

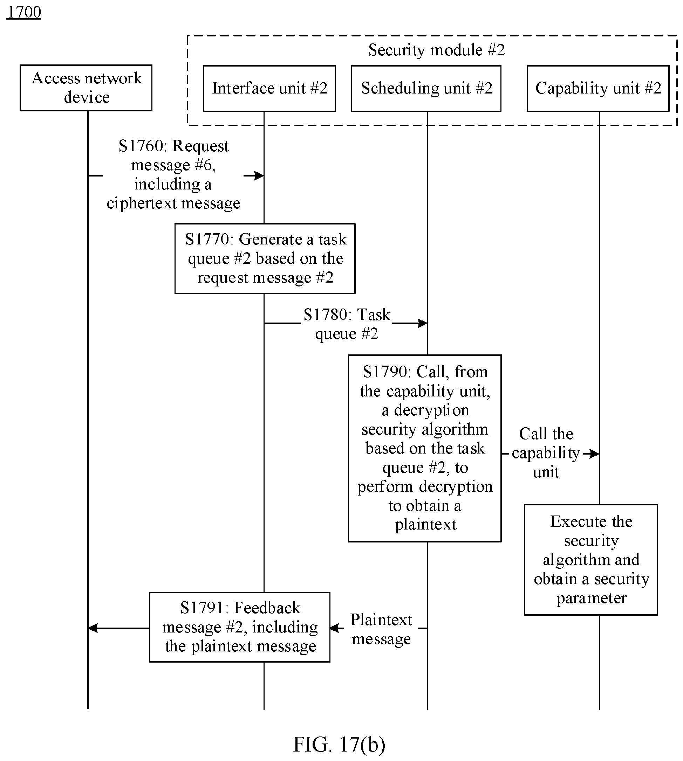

FIG. 17(a) and FIG. 17(b) are a flowchart of an encryption/decryption service according to a specific embodiment of this application;

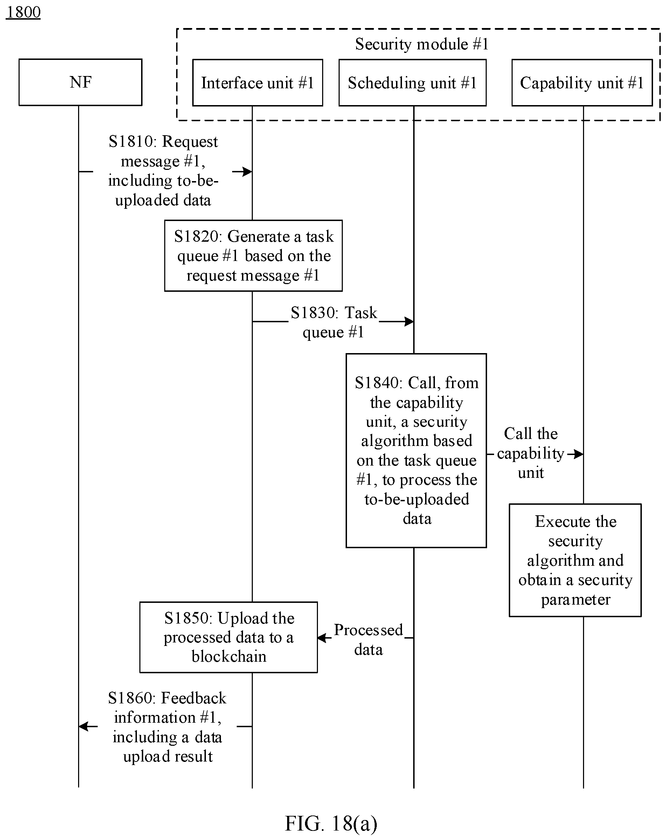

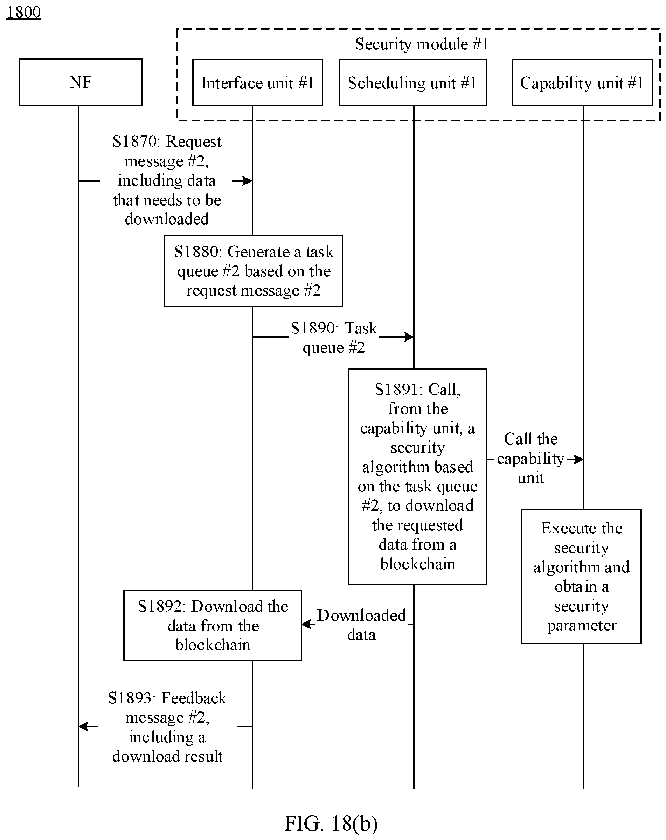

FIG. 18(a) and FIG. 18(b) are a flowchart of a service that is used for uploading data to or downloading data from a blockchain and that is applicable to a specific embodiment of this application;

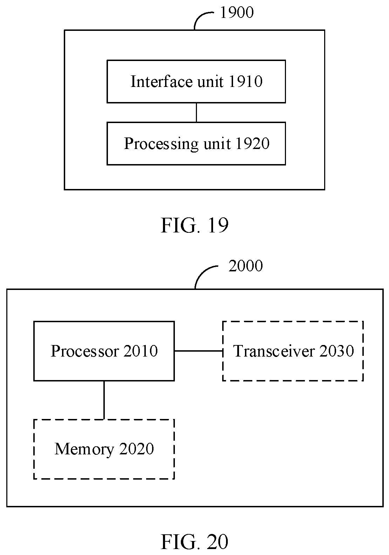

FIG. 19 is a block diagram of a communication apparatus applicable to an embodiment of this application; and
FIG. 20 is a diagram of an architecture of a communication apparatus applicable to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communication (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th Generation, 5G) mobile communication system or a new radio (new radio, NR) system, a wireless local area network (wireless local area network, WLAN) system, and a wireless fidelity (wireless fidelity, Wi-Fi) system. The 5G mobile communication system may be non-standalone (non-standalone, NSA) networking or standalone (standalone, SA) networking.

The technical solutions provided in this application may be further applied to machine type communication (machine type communication, MTC), a long term evolution technology for machine-to-machine communication (long term evolution-machine, LTE-M), a device-to-device (device-to-device, D2D) network, a machine-to-machine (machine-to-machine, M2M) network, an internet of things (internet of things, IoT) network, or other networks. The IoT network may include, for example, an internet of vehicles. Communication manners in an internet of vehicles system are collectively referred to as vehicle to X (vehicle to X, V2X, X can stand for anything). For example, V2X may include vehicle to vehicle (vehicle to vehicle, V2V) communication, vehicle to infrastructure (vehicle to infrastructure, V2I) communication, vehicle to pedestrian communication (vehicle to pedestrian, V2P), vehicle to network (vehicle to network, V2N) communication, or the like.

The technical solutions provided in this application may be further applied to a future communication system, for example, a 6th generation (6th Generation, 6G) mobile communication system. This is not limited in this application.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

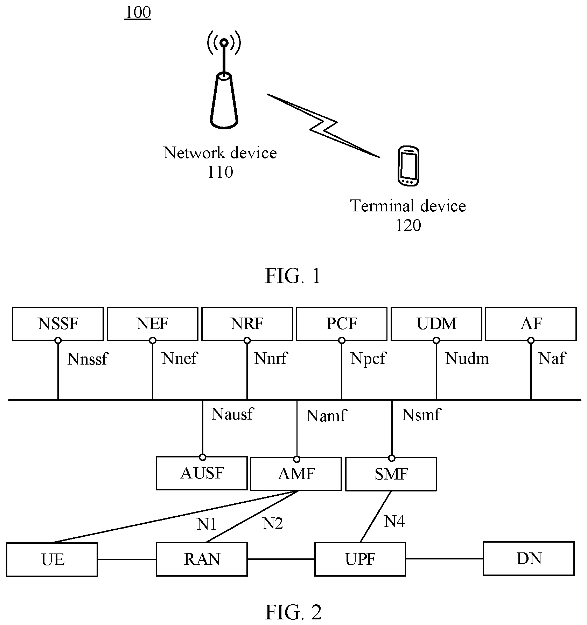

FIG. 1 is a diagram of a communication system 100 applicable to embodiments of this application. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. The plurality of antennas configured for each communication device in the communication system may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that FIG. 1 is merely a simplified diagram used as an example for ease of understanding, and the communication system may further include another network device or another terminal device that is not shown in FIG. 1.

It should be further understood that the communication system 100 shown in FIG. 1 is merely an example of an application scenario of embodiments of this application, and this application may be further applicable to communication between any two devices, for example, communication between terminal devices and communication between network devices.

FIG. 2 is a diagram of a network architecture 200 applicable to a communication system in this application.

As shown in FIG. 2, the network architecture of the communication system includes but is not limited to the following network elements:
1. User equipment (UE): User equipment in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The user equipment may be a device that provides voice/data connectivity for a user, for example, a handheld device or a vehicle-mounted device that has a wireless connection function. Currently, the terminal may be, for example, a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a future 5G network, user equipment in a future evolved public land mobile network (public land mobile network, PLMN), or the like. This is not limited in embodiments of this application.

By way of example, and not limitation, in embodiments of this application, the user equipment may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements powerful functions through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, in embodiments of this application, the user equipment may alternatively be user equipment in an internet of things (internet of things, IoT) system. IoT is an important part of future information technology development. A main technical feature of IoT is to connect things to a network by using a communication technology, to implement a smart network for human-machine interconnection and thing-thing interconnection.

In embodiments of this application, an IoT technology can implement massive connections, in-depth coverage, and terminal power saving by using, for example, a narrowband (narrowband) NB technology. For example, an NB may include one resource block (resource block, RB), that is, a bandwidth of the NB is only 180 KB. To implement massive access, terminals need to be discrete in access. According to a communication method in embodiments of this application, a congestion problem that occurs in the IoT technology when massive terminals access a network through the NB can be effectively resolved.

In addition, an access device in embodiments of this application may be a device configured to communicate with user equipment, and the access device may also be referred to as an access network device or a radio access network device. For example, the access device may be an evolved NodeB (evolved NodeB, eNB or eNodeB) in an LTE system, may be a radio controller in a cloud radio access network (cloud radio access network, CRAN) scenario, may be a relay station, an access point, a vehicle-mounted device, a wearable device, and an access device in a future 5G network or an access device in a future evolved PLMN network, may be an access point (access point, AP) in a WLAN, or may be a gNB in a new radio (new radio, NR) system. This is not limited in embodiments of this application.

In addition, in embodiments of this application, the user equipment may further communicate with user equipment in another communication system, for example, inter-device communication. For example, the user equipment may further transmit (for example, send and/or receive) a time synchronization packet with the user equipment in the another communication system.

2. Access device (AN/RAN): An access device in embodiments of this application may be a device configured to communicate with user equipment, and the access device may also be referred to as an access network device or a radio access network device. For example, the access device may be an evolved NodeB (evolved NodeB, eNB or eNodeB) in an LTE system, may be a radio controller in a cloud radio access network (cloud radio access network, CRAN) scenario, may be a relay station, an access point, a vehicle-mounted device, a wearable device, and an access device in a future 5G network or an access device in a future evolved PLMN network, may be an access point (access point, AP) in a WLAN, or may be a gNB in a new radio (new radio, NR) system. This is not limited in embodiments of this application.

In addition, in embodiments of this application, the access device is a device in a RAN. In other words, the access device is a RAN node that connects the user equipment to a wireless network. For example, by way of example, and not limitation, the access device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (base band unit, BBU), or a wireless fidelity (wireless fidelity, Wi-Fi) access point (access point, AP). In a network structure, a network device may include a central unit (central unit, CU) node, a distributed unit (distributed unit, DU) node, a RAN device including a CU node and a DU node, or a RAN device including a control plane CU node (CU-CP node), a user plane CU node (CU-UP node), and a DU node.

The access device may serve a cell. User equipment communicates with the access device on a transmission resource (for example, a frequency domain resource, or in other words, a frequency spectrum resource) used for the cell. The cell may be a cell corresponding to the access device (for example, a base station). The cell may belong to a macro base station or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are suitable for providing a high-speed data transmission service.

In addition, a plurality of cells may simultaneously operate in a same frequency band on a carrier in the LTE system or the 5G system. In some special scenarios, it may also be considered that a concept of the carrier is equivalent to that of a cell. For example, in a carrier aggregation (carrier aggregation, CA) scenario, when a secondary component carrier is configured for UE, both a carrier index of the secondary component carrier and a cell identification (cell identification, Cell ID) of a secondary cell that operates on the secondary component carrier are carried. In this case, it may be considered that a concept of a carrier is equivalent to that of a cell. For example, accessing a carrier by the user equipment is equivalent to accessing a cell by the user equipment.

The communication system in this application may be further applicable to a vehicle to everything (vehicle to everything, V2X) technology. To be specific, the user equipment in this application may alternatively be a vehicle, for example, an intelligent vehicle or an autonomous vehicle.

Herein, "X" in V2X represents different communication targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In the V2X, the access device may configure a "zone (zone)" for the UE. The zone may also be referred to as a geographical area. After the zone is configured, the world is divided into a plurality of zones, and the zones are defined by reference points, lengths, and widths. When determining an identifier (identifier, ID) of a zone, the UE performs a remainder operation by using a length of the zone, a width of the zone, a quantity of zones in terms of length, a quantity of zones in terms of width, and a reference point. The foregoing information may be configured by the access device.

A V2X service may be provided in two manners: a proximity-based services communication (Proximity-based Services Communication 5, PCS) interface manner and a Uu interface-based manner. A PC5 interface is an interface defined based on a sidelink (sidelink), and communication devices (for example, vehicles) may directly communicate with each other through the PCS interface. The PCS interface may be used out of coverage (out of coverage, OoC) and in coverage (in coverage, IC), but only an authorized communication device can use the PCS interface for transmission.

3. An access and mobility management function (Access and Mobility Management Function, AMF) network element is mainly used for mobility management, access management, and the like, and may be configured to implement functions other than session management in functions of a mobility management entity (mobility management entity, MME) in an LTE system, for example, functions such as lawful interception and access authorization/authentication. When providing a service for a session in user equipment, the AMF network element provides a control plane storage resource for the session, to store a session identifier, an SMF network element identifier associated with the session identifier, and the like. In embodiments of this application, the AMF network element may be configured to implement functions of an access and mobility management network element.

4. A session management function (Session Management Function, SMF) network element is mainly used for session management, allocation and management of an internet protocol (internet protocol, IP) address of user equipment, selection and management endpoints of interfaces of a user plane function, a policy control function, and a charging function, downlink data notification, and the like. In embodiments of this application, the session management function network element may be configured to implement functions of a session management network element.

5. A policy control function (Policy Control Function, PCF) network element is a unified policy framework used to guide network behavior, and provides policy rule information, a traffic-based charging control function, and the like for control plane function network elements (such as AMF and SMF network elements).

6. A unified data management (unified data management, UDM) network element is mainly responsible for processing subscription data of UE, including storage and management of a user identifier, user subscription data, authentication data, and the like.

7. A user plane function (User Plane Function, UPF) network element may be used to perform packet routing and forwarding, quality of service (quality of service, QoS) processing of user plane data, or the like. User data may be accessed to a data network (data network, DN) through the network element, or may be received from the data network and transmitted to user equipment through an access network device. A transmission resource and a scheduling function that are used by the UPF network element to provide a service for user equipment are managed and controlled by an SMF network element. In embodiments of this application, the user plane function network element may be configured to implement functions of a user plane network element.

8. A network exposure function (Network Exposure Function, NEF) network element is used to securely expose, to the outside, a service, a capability, and the like that are provided by a 3GPP network function, and mainly supports secure interaction between a 3GPP network and a third-party application.

9. An application function (Application Function, AF) network element is used to perform application-affected data routing, access a network exposure function network element, interact with a policy framework to perform policy control, or the like, for example, affect a data routing decision, perform a policy control function, or provide some third-party services for a network side.

10. A network slice selection function (Network Slice Selection Function, NSSF) network element is mainly responsible for network slice selection, and determines a network slice instance that UE is allowed to access based on slice selection assistance information of the UE, subscription information, and the like.

11. An authentication server function (Authentication Server Function, AUSF) network element supports 3GPP and non-3GPP access authentication.

12. A network repository function (Network Repository Function, NRF) network element supports registration and discovery of a network function.

13. A unified data repository (Unified Data Repository, UDR) network element stores and obtains subscription data used by a UDM and a PCF.

In the network architecture, an N2 interface is a reference point between the RAN and an AMF entity, and is configured to send a NAS (Non-Access Stratum, non-access stratum) message and the like; an N3 interface is a reference point between the RAN and the UPF network element, and is configured to transmit user plane data and the like; and an N4 interface is a reference point between the SMF network element and the UPF network element, and is configured to transmit information such as tunnel identification information of an N3 connection, data buffering indication information, and a downlink data notification message.

It should be understood that the UE, the (R)AN, the UPF, and the DN in FIG. 2 are generally referred to as data plane network functions and entities. Data traffic of a user may be transmitted by using a PDU session established between the UE and the DN, and the transmission passes through two network function entities: the (R)AN and the UPF. Other parts are referred to as control plane network functions and entities, and are mainly responsible for functions such as authentication and authorization, registration management, session management, mobility management, and policy control, to implement reliable and stable transmission of user plane traffic.

It should be understood that the foregoing network architecture applied to embodiments of this application is merely an example of a network architecture described from a perspective of a conventional point-to-point architecture and a service-based architecture, a network architecture applicable to embodiments of this application is not limited thereto, and any network architecture that can implement functions of the foregoing network elements is applicable to embodiments of this application.

It should be understood that names of the interfaces between the network elements in FIG. 2 are merely examples, and the interfaces may have other names in specific implementation. This is not specifically limited in this application. In addition, names of messages (or signaling) transmitted between the foregoing network elements are merely examples, and do not constitute any limitation on functions of the messages.

It should be noted that the foregoing "network element" may also be referred to as an entity, a device, an apparatus, a module, or the like. This is not particularly limited in this application. In addition, in this application, for ease of understanding and description, descriptions of "network element" are omitted in some descriptions below. For example, the SMF network element is referred to as SMF for short. In this case, the "SMF" should be understood as an SMF network element or an SMF entity, and descriptions of a same case or similar cases below are omitted.

It may be understood that the entities or the functions may be network elements in a hardware device, may be software functions running on dedicated hardware, or may be virtualized functions instantiated on a platform (for example, a cloud platform).

It should be understood that the foregoing network architecture applied to embodiments of this application is used as an example to describe a service-based architecture. A core network sets dedicated network elements for different types of communication services. In other words, a communication-related function may be provided in a form of a service. In embodiments of this application, communication-related functions are not limited to the function network elements listed in FIG. 2. This is not limited in embodiments of this application.

It should be noted that security of a conventional 5G network is distributed in communication nodes as a function. For example, the AUSF supports authentication for 3GPP access and non-3GPP access; the SEAF provides an authentication function in a serving network, and may support an initial authentication procedure based on a subscription concealed identifier (subscription concealed identifier, SUCI); the AMF supports encryption and integrity protection of NAS signaling; the NRF supports a bidirectional authentication function with another NF, and supports an authorization function for the another NF; the NEF supports a bidirectional authentication function with the AF, and supports encryption, integrity protection, and replay protection of messages between the NEF and the NF through a transport layer security (transport layer security, TLS) protocol; a base station supports encryption, integrity protection, and replay protection of messages between the base station and the UE through a PDCP protocol; a CU and a DU support bidirectional authentication, encryption, integrity protection, and replay protection; and the UE supports a bidirectional authentication function with a core network, supports encryption, integrity protection, and replay protection of NAS signaling between the UE and the core network, supports encryption, integrity protection, and replay protection of radio resource control (radio resource control, RRC) messages between the UE and a base station according to a packet data convergence protocol (packet data convergence protocol, PDCP), supports a privacy protection function of converting a subscription permanent identifier (subscription permanent identifier, SUPI) into a 5G globally unique temporary UE identifier (5G globally unique temporary identifier, 5G-GUTI), supports a security function visible to upper-layer applications, and allows users to configure a security function.

Currently, most security functions are functions in a communication device, and interfaces between the security functions and the communication device are not standardized. This imposes an obvious limitation on development of the security functions. For example, an operation of setting a security function is complex, and a workload is heavy. This does not comply with a development trend of a future network. For another example, a security function is set on NFs, and modification of a security protocol usually involves a plurality of NFs in a procedure. Consequently, deployment is complex, and maintenance costs are high. For still another example, when network vulnerabilities are exploited, and attacks are about to occur or have occurred, it is challenging to quickly upgrade security capabilities because security capabilities embedded in different network functions are different. As a communication service has an increasingly high security requirement, conventional security function deployment cannot meet a communication requirement, resulting in a communication security problem.

Secure transmission is a basic guarantee of communication. A conventional security function is closely coupled to a communication function. In embodiments of this application, an independent security function can be deployed, so that an independent security service can be enabled in a communication node, thereby improving communication security performance.

Embodiments of this application provide a security function module. The security function module is not limited to a form of hardware or software. The security function module includes an interface unit, a scheduling unit, a management unit, and a capability unit. The interface unit, the management unit, and the capability unit separately communicate with the scheduling unit in a point-to-point manner, and there is no interface between the interface unit, the management unit, and the capability unit. In the following specific embodiments, a first module and a second module may be two different types of security function modules, and a first security module and a second security module are two security function modules serving different communication nodes, and are represented by a security module #1 and a security module #2 respectively in the specific embodiments.

The interface unit is responsible for translation and negotiation between a device or function and another device or function, and orchestration of an internal task (logic of calling the capability unit). The scheduling unit is responsible for executing orchestration delivered by the interface unit. The management unit is responsible for management transactions such as update and insertion/removal of internal components of the device or function, and common management functions such as log and alarm. The capability unit performs specific capability operations. There may be a plurality of capability units, and different capability units may implement different security capabilities. The capability units may be adjusted based on a specific requirement, for example, a capability unit may be added, removed, or updated. The device or function may externally support a hardware/software interface, and may support CP/UP/MP and another standardized protocol based on the hardware/software interface.

The security function module is specifically represented by the first module and the second module based on different capability properties. The first module is configured to call a security algorithm, obtain a security parameter, or request a security service from another security function module, and the second module is configured to manage a security service or manage the first module.

For example, that the second module manages the security service may be managing, adding, deleting, or assigning a new capability (data on-chain, download, participation in a publicity mechanism, smart contract, or the like) to a blockchain node in a blockchain service.

It should be understood that, in this application, the capability unit may be adjusted based on a specific requirement, and management performed by the second module on the first module may be management on the capability unit in the first module. For example, a capability unit may be added, removed, or updated.

The following describes in detail internal function units in the first module and the second module.

The first module includes a first scheduling unit, a first capability unit, a first management unit, and a first interface unit. The first interface unit has all capability formats and parameters that may be used by the first security module in a specific trusted negotiation process, and is a unique channel for the first security module to the outside. The interface unit receives tasks from a management function or other network functions, performs translation and sequential task flow decomposition, and transfers the tasks to the scheduling unit for execution. The first scheduling unit provides a queue scheduling function between modules in the first security module based on a sequence task queue received from the interface unit, to ensure a correct sequence of mutual access between functions in the first security module. The first management unit provides an internal management function of the first security module, including attribute setting and updating of the first security module, and hot swap management, monitoring, warning, and the like of an internal module in the first security module. The first capability unit, a trusted storage environment, a basic password, authorization, trusted attestation, privacy protection, and a blockchain are enabling modules at a current stage. (1) The trusted storage environment ensures secure storage of a root of trust, high-security-level data, and functional logic. (2) A basic password enabling module includes symmetric, asymmetric, hash, signature, homomorphic encryption, post-quantum cryptography (post-quantum cryptography, PQC), and atomic implementation of corresponding algorithms, and is scalable. (3) An authorization enabling module includes static authorization, token token-based authorization, and other possible authorization modes in the future. (4) A measurement enabling module provides a trusted measurement function based on measurement and a comparison mode, the function depends on the root of trust, trusted boot, and execution logic in the trusted storage environment, and the measurement enabling module starts work based on different trusted measurement triggering time, and directly delivers a measurement value and a measurement determining result to an operator, a user, and an application party or a third party that needs the information. Alternatively, the information may be stored in a consensus manner by using a blockchain, or may be stored and authorized for access in a centralized manner. (5) A privacy protection enabling module includes a plurality of privacy protection algorithms that can be used, such as multi-party computation (multi-party computation, MPC), data masking, data masking, zero-knowledge proof, and differential privacy. (6) A blockchain enabling module executes transaction consensus, link communication, and a smart contract, and has a capability exposure feature, so that a customization party calls the enabling module to establish a service blockchain oriented to specific service logic, for example, a distributed public key infrastructure (distributed public key infrastructure, DPKI) chain, an identifier management (id management, IDM) chain, and a network behavior record chain. (7) Any trusted enabling module may be added.

The second module includes a second scheduling unit, a second capability unit, a second management unit, and a second interface unit. The second interface unit is a communication interface between the second module and an external network function, and is responsible for receiving a task from a management function or another network function, performing translation and sequential task flow decomposition, and delivering the task to the second scheduling unit for execution. The second scheduling unit performs translation and sequential task flow decomposition, and provides a queue scheduling function between function execution modules in the second module, to ensure a correct sequence of mutual access between functions in an engine. Different from a security management function of a network management plane, the second management unit is configured to: create and manage a trusted connection related to a service process online, and serve a service created based on a blockchain in a consensus mode, including blockchain creation, multi-link communication, and the like. The second capability unit is a capability of analyzing by using network behavior data to formulate a security policy. After behavior information is collected, an AI capability of a 6G network may be used to analyze and output policies. Alternatively, a third-party professional service capability may be integrated, to anonymize behavior data and then send the data to a third party for analysis and policy output. Alternatively, a third-party service module (such as Defense solution) is embedded into the second module and internalized as a part of the second module. A trusted policy output by the second module is output through the second interface unit.

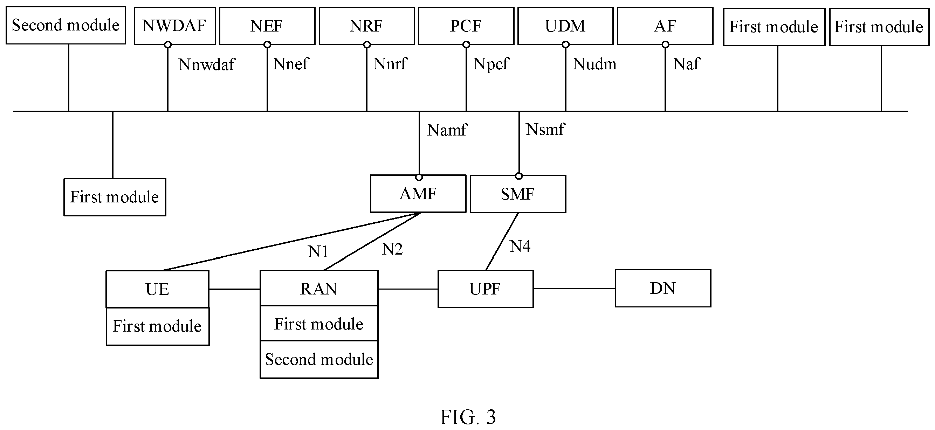

FIG. 3 is a diagram of a network architecture 300 applicable to this application.

A conventional network architecture is used as an example, and a security function module may be deployed in a conventional communication node. For example, the security function module may be deployed on a terminal side. As shown in FIG. 3, a first module may be integrated with a function of UE, that is, the first module may be deployed inside the UE. For example, the first module may be deployed in an ME, and communicates with a function of a UICC through an interface, or may be combined with a UICC. The first module may be independently deployed with the UE, that is, the first module may be deployed outside the UE as a function entity. A security function may be deployed outside an access network device as a function entity, or may be deployed inside an access network device as a logical function. For example, when the access network device may include a CU node and a DU node, the first module or a second module may be deployed only in a CU, or may be deployed in both a CU and a DU. The first module or the second module may be deployed in a core network device, or may be deployed outside a core network device as a function entity. For example, the first module in FIG. 3 is independently deployed on a bus as a network function of a core network.

The following describes in detail three deployment cases of the security function module.

Case 1: The second module is deployed on a terminal side.

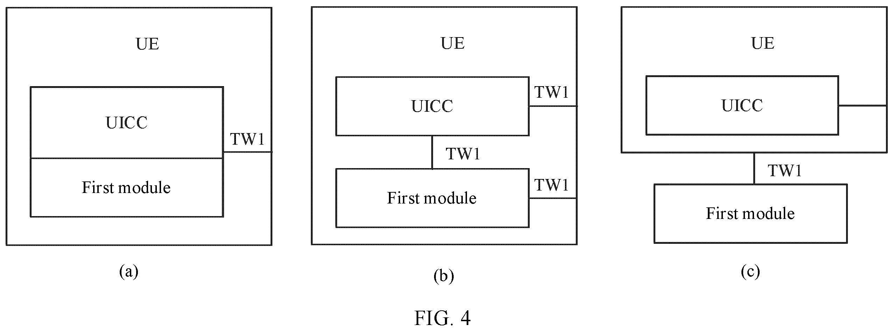

FIG. 4 shows three deployment states of the first module on the terminal side. As shown in (a) in FIG. 4, the first module may be integrated with UE, that is, deployed inside the UE. The first module is combined with a smart card function. For example, the first module may communicate with a function of a mobile phone card through an interface. The card may be in a form of a SIM, a USIM, a vSIM, an eSIM, a softSIM, an iSIM, an eUICC, or the like. As shown in (b) in FIG. 4, the first module may be integrated with UE, that is, deployed inside the UE. The first module may be deployed in an ME (outside a UICC) in a form of another hardware card, and may communicate with the card through an interface. As shown in (c) in FIG. 4, the first module may be independently deployed with UE, that is, the first module is neither on a UICC nor on an ME. The first module has both an interface to communicate with the UICC and an interface to communicate with the ME, for example, is connected to the UE through an external interface Type-C of the ME.

Case 2: The first module and the second module are deployed on an access network side.

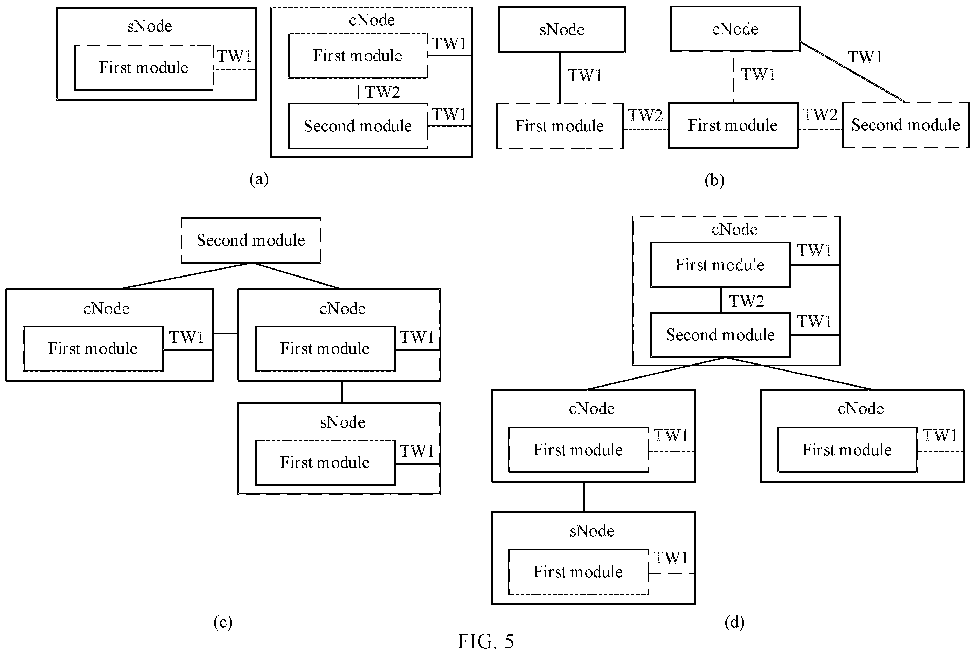

FIG. 5 shows four deployment states of the first module and the second module on the access network side. If an access network device is divided into a cNode and an sNode, where the cNode is a control centralized node on the access network side, and the sNode is a service logic node and can be managed and controlled by the cNode, a trusted function is deployed in the following several cases. As shown in (a) in FIG. 5, a second module and a first module are deployed in a cNode, a first module is deployed in an sNode and is managed by the second module in the cNode, the first module is deployed in the cNode/sNode as a hardware card, and TW1 is an internal interface. As shown in (b) in FIG. 5, a first module or a second module is independently deployed with a cNode/an sNode, each cNode/sNode may communicate with the first module or the second module of the cNode/sNode, and TW1 is a network interface. As shown in (c) in FIG. 5, a second module is independently deployed, and may communicate with all cNodes, and a first module is deployed in a cNode/an sNode as a hardware card. As shown in (d) in FIG. 5, a first module is deployed in a cNode/an sNode as a hardware card, and a second module is deployed in one cNode.

Case 3: The first module and the second module are deployed on a core network side.

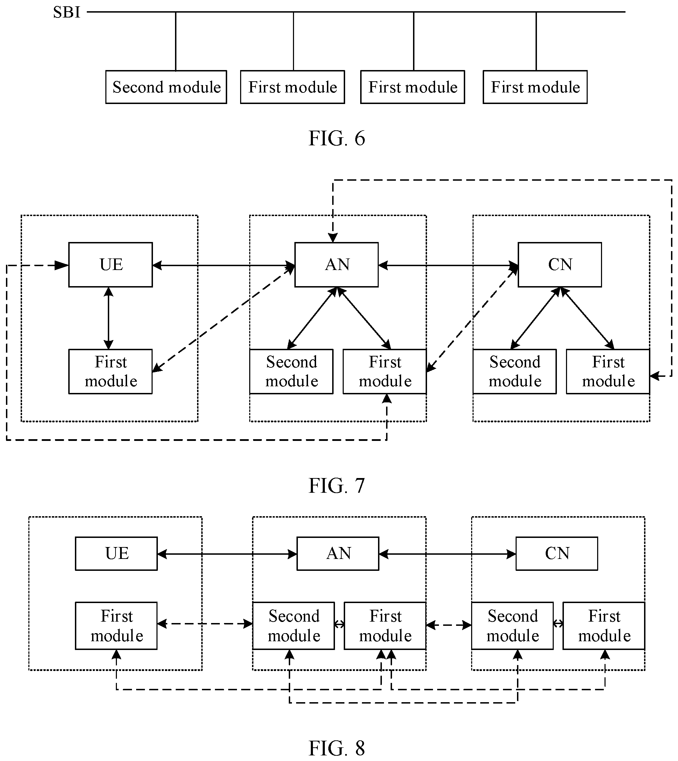

FIG. 6 shows a deployment state of first modules and the second module on the core network side. The first module and the second module are deployed on the core network side, and are connected to an SBI bus together with other network elements. There may be one second module, and the first module is deployed in the following four cases. (1) There is a general first module in a core network, and the first module includes all security functions required by the core network. (2) There are several first modules that do not include all security functions in a core network, and the first modules provide security services for different NFs. (3) A core network includes one general first module and several first modules including only some security functions, and the general first module may provide establishment and configuration functions of other first modules. If an OAM, a RAN, UE, or a third party wants to obtain security service information of the core network, the security service information may also be directly obtained from a file of the general first module. (4) A first module is deployed at a physical implementation boundary. For example, when different NFs are implemented on one server, one first module is deployed for the server, to provide a trusted function for all NFs running on the server.

It should be noted that, based on requirements of different communication nodes, security function modules deployed in different nodes may implement different security functions. The following uses the first security module as an example for description. The first security module may serve any communication node or a third-party request node, and an example in which the any communication node or the third-party request node is a requester is used for description.

It should be understood that the foregoing deployment forms are merely examples for description. Regardless of whether a security function module is on a network side, a terminal side, or an application side, a unified external interface may be used to form a basis for multi-party negotiation and trusted communication.

The following describes three newly added communication interfaces (denoted as a first interface, a second interface, and a third interface) in this application.

The first interface is an interface between the first module/second module and a communication node.

FIG. 7 is a diagram of the first interface between the first module/second module and the communication node. The first interface is used by the requester to initiate a request for the first security service, and the first interface is further used by the first module/second module to send a response for executing the first security service.

The requester may be a communication node, or may be the first module or the second module.

For example, when the communication node needs to perform security services such as encryption, authentication, authorization, trusted attestation, privacy protection, and a blockchain-related function, the communication node initiates a trusted service request and receives a trusted service response through the first interface. The trusted service response generally includes a result of calling a security algorithm, or some requested security-related parameters.

When the first module/second module serves the requester, the first interface is further used by the requester to initiate a request for management and configuration of the first module/second module, and the first interface is further used by the first module/second module to send a response to management and configuration of the first module/second module.

For example, when UE needs a new security capability, the UE may request, through the first interface, the first module to manage and configure the first module. Specifically, the UE requests the first module to add a new capability unit, so that the new security capability can be provided.

For another example, when an access network device deregisters a security capability, the access network device may request, through the first interface, the first module to delete a corresponding capability unit. When a communication node deregisters all security capabilities, the first module and the second module need to be deleted.

For another example, when a communication node is initially set up, a usage scenario changes, or a security requirement changes, the communication node may initiate a network global trusted policy request to the second module through the first interface, to request the second module to perform situational awareness and generate a network global trusted policy, and the second module may collect information from the communication node through the first interface, to implement network-wide situational awareness.

That the first module/second module serves the requester may be understood as that the first module/second module is deployed in or outside the communication node.

The second interface is an interface between the first module and the second module.

FIG. 8 is a diagram of the second interface between the first module and the second module. The second interface is configured to transmit a request and a response of the first security service, and the second interface is further configured to transmit a request and a response of the second module to management and configuration of the first module.

For example, a trusted policy may be transferred between the first module and the second module through the second interface. The trusted policy is a result of trusted negotiation, and declares security-related content such as a security algorithm used by two nodes, an enabled security capability, and an activated root of trust.

For another example, a network global trusted policy may be transferred between the first module and the second module through the second interface. The network global trusted policy is a network situational awareness result generated after a capability unit of the second module collects information in an entire network and provides the information to AI for information analysis and processing.

The third interface is an interface between internal function units of the first module and the second module.

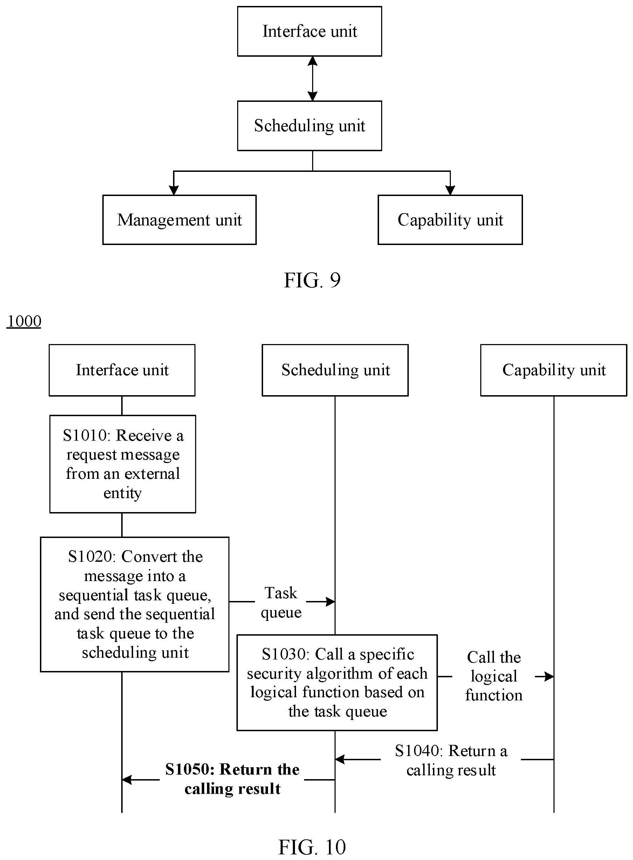

FIG. 9 is a diagram of a third interface between internal function units of a security function module.

It should be understood that capability units in the security function module may come from different security vendors. During implementation, an equipment vendor may implement only other function units, and a capability unit is freely selected based on an operator, an application, or even a user, to continuously follow up on a latest security technology and ensure advancement of a security function of a communication network. Therefore, interfaces between modules in a trusted function also need to be opened and standardized. In addition, a standardized internal interface further facilitates hot swap of a security function, and can be updated in real time as required. During upgrade of a network security function, only a capability unit used by a security vendor to implement interface standardization is required to access a security function module. This is more convenient and faster, and helps add other security technologies to a future network.

A function of the third interface is described in detail with reference to a communication procedure that is of internal function units in a security function module and that is shown in FIG. 10.

Step S1010: An interface unit receives a request message from an external entity.

Step S1020: The interface unit converts the message into a sequential task queue, and sends the sequential task queue to a scheduling unit.

Step S1030: The scheduling unit calls a specific security algorithm of each logical function based on the sequential task queue.

Step S1040: Each capability unit returns a result of calling of the scheduling unit to the scheduling unit.

Step S1050: The scheduling unit feeds back the result to the interface unit.

The interface unit further feeds back the result to the external entity, or generates a new sequential task queue as required.

The following describes the technical solutions of this application in detail by using specific embodiments. The following several specific embodiments may be combined with each other, and a same or similar concept or process may not be described repeatedly in some embodiments.

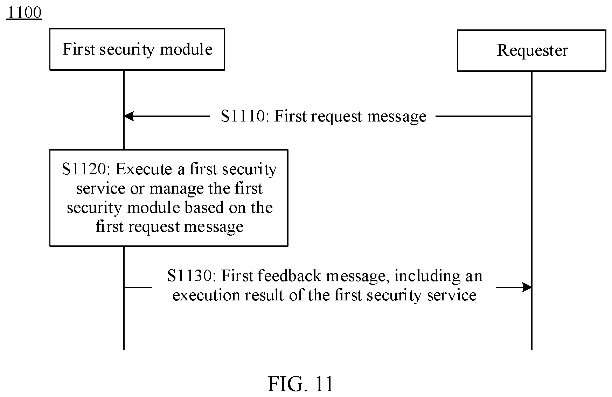

FIG. 11 is a diagram of a communication method 1100 applicable to this application. The method 1100 shown in FIG. 11 is applicable to systems or architectures shown in FIG. 1 to FIG. 3. The method 1100 includes the following steps.

S1110: A requester sends a first request message to a first security module.

In this application, the requester includes one of a first node, a second node, or a second security module. The first node may be a communication node served by the first security module, the second node is a communication node served by the second security module, and the second security module and the first security module are security function modules deployed in different communication nodes in a communication system.

It should be understood that the first node and the second node may be any communication node or application in the communication system. For example, the first node and the second node may be terminal devices, access network devices, core network elements, or third-party applications. This is not limited in embodiments of this application.

It should be understood that, when the first security module is a second module deployed on a core network side, the first security module may serve all communication nodes on the core network side; or when the first security module is a second module deployed on an access network side, the first security module may serve all communication nodes on the access network side and a UE side.

There may be a plurality of manners to trigger the first security module to execute a security service or manage the first security module, and the requester sending the first request message to the first security module or sending a first notification message to the first security module are two of the manners.

In a possible implementation, the requester sends the first request message to the first security module, where the first request message is used to request one or more trusted services from the first security module.

Specifically, the trusted service may be a conventional trusted service, may be a trusted service that may be newly added in future communication, or may be a trusted service required by any communication node or the requester.

Optionally, the first request message may include one trusted service identifier or a trusted service list of a plurality of trusted services. The trusted service list of the plurality of trusted services is used to apply for a plurality of trusted services at a time.

In a possible implementation, the first request message includes an identifier of a destination node of a trusted service.

The identifier of the destination node of the trusted service indicates a service object of the trusted service. For example, in an authentication service, an identifier of a destination node of a trusted service indicates a to-be-authenticated terminal device of the authentication service.

It should be understood that, in the conventional technology, when a communication node requests a security function, a preprocessing result of the communication node is required, for example, calculation of a security algorithm or obtaining of a security parameter.

In this application, when requesting a security service, a communication node may add, to a request message, an identifier of a destination node of a trusted service. A security module may determine, based on the identifier of the destination node of the trusted service, a trusted policy corresponding to the identifier, and further determine a specific security algorithm and a used security parameter according to the trusted policy. The trusted policy specifies a security algorithm and a security parameter that need to be specifically called.

For example, when the requester is the first node, the first request message includes an identifier of the second node, to indicate a destination node of a trusted service, for example, indicate a to-be-authenticated party in an authentication service or an attester in a trusted attestation service.

In another possible implementation, the first request message includes a security parameter.

The security parameter is a security parameter input when a security module executes a specific algorithm.

For example, when the requester is the second security module, the first request message includes a security parameter that is used by the first security module to execute a specific security algorithm, for example, an authentication vector carried in a UE authentication request sent by the first security module on an AMF side to the second security module on a terminal side in an authentication service.

In another possible implementation, the first request message may not include an identifier of the second node or a security parameter.

For example, when the requester is the second node, the first security module may obtain a security parameter that needs to be input for a security algorithm. For example, an input parameter used by the first security module to execute a specific security algorithm is preset or may be directly obtained by the first security module. For example, in a trusted attestation service, a blockchain timestamp may be used as a challenge value in the trusted attestation service, and the first security module inputs the challenge value as a parameter of the security algorithm.

It should be understood that, when the requester is the second node, a data packet header of the first request message includes an identifier indication of the second node. Therefore, the first request message may not include the identifier of the second node.

In another possible implementation, the first request message includes management requirement information of the first node.

For example, when the requester is the first node, the first node may send the management requirement information to the first security module. The management requirement information may be understood as a security requirement of the first node. The first security module manages the first security module based on the management requirement information, for example, adjusts a capability unit in the first security module, and adds a new capability unit, to meet the security requirement proposed by the first node.

In another possible implementation, the first request message includes management target information of the first security module.

For example, when the requester is the second security module, the second security module may send the management target information to the first security module. The management target information may be understood as a management target of the first security module, for example, establishment, deletion, and status setting of the first security module, or managing a capability unit in the first security module, updating a profile based on adjustment on the capability unit, and the like.

Management on the capability unit in the first security module includes addition, deletion, or status setting of the capability unit based on a requirement of the requester, to meet a security requirement of the requester.

In another possible implementation, the requester sends a first notification message to the first security module, where the first notification message is used to notify the first security module of a first event, and the first event may be a preset trigger event, and may be specifically a status notification of the requester. For example, when the requester is UE, the first event may be that the UE accesses an access network device.

In this case, a trusted service list may be preset in the first security module. For example, the trusted service list is preset by an operator, a default list is specified in a standard protocol, or a list is generated in a trusted policy negotiation phase. This is not limited in embodiments of this application.

In addition to the foregoing two manners, the first security module may further automatically trigger execution of a trusted service based on a preset period. For example, if the first security module is a security module deployed on a core network side, the first security module may periodically perform trusted attestation on an access network device or a terminal device, or may periodically perform authentication on a terminal device. For another example, the first security module may periodically upload log data to a blockchain based on a period. Alternatively, the first security module may trigger a trusted service based on a preset timer. This is not limited in embodiments of this application.

It may be understood that step S1110 is an optional step.

It should be noted that, before the first security module receives the first request message or the first notification message, a trusted negotiation procedure is completed between the first security module and the requester. Specifically, a trusted policy may be determined through the trusted negotiation procedure.

In a possible understanding, the trusted negotiation procedure is a process in which the first security module and the second security module that participate in negotiation generate a trusted policy through negotiation based on a security requirement of a node served by a security module, security capabilities that can be provided by the first security module and the second security module, and the like. This process is performed before the trusted service procedure. For details, refer to the 3GPP standard protocol TS 33.501.

The trusted policy specifies a security algorithm and a security parameter that need to be specifically called. For example, an authentication and key agreement (authentication and key agreement, AKA) is used for authentication between the first node and the second node, a trusted computing platform module (trusted platform module, TPM) is used for trusted attestation between the first node and the second node, and an advanced encryption standard (advanced encryption standard, AES) algorithm is used for encryption/decryption between the first node and the second node. After being generated, the trusted policy corresponds to an identifier, and is stored in the first security module and the second security module. For example, the first security module stores the identifier of the second node, and trusted policies of the first node and the second node, and the second security module stores an identifier of the first node, and the trusted policies of the first node and the second node.

After receiving a request message for a trusted service, the first security module locates, based on the identifier that is of the second node and that is carried in the message, a trusted policy previously obtained through negotiation with the second security module, and determines a specific to-be-called security algorithm and a to-be-used security parameter.

S1120: The first security module executes a first security service or manages the first security module based on the first request message.

The first security module performs at least one of the following operations based on the first request message or the first notification message: calling a security algorithm, obtaining a security parameter, or requesting a second security service from the second security module. That the first security module manages the first security module includes managing a capability unit in the first security module and managing the first security module.

Specifically, the first security module determines a to-be-called security algorithm or an obtained security parameter according to the trusted policy.

In a possible implementation, the first request message includes the identifier of the second node, and the first security module may determine, based on the identifier of the second node, a trusted policy corresponding to the identifier, and further determine a specific security algorithm and a to-be-used security parameter according to the trusted policy.

In a possible implementation, the first request message includes a security parameter, and the first security module directly inputs the security parameter into a security algorithm for calculation.

In a possible implementation, the first request message does not include the identifier of the second node or the security parameter. In this case, the first security module may obtain the security parameter or preset an input security parameter in advance.

In a possible implementation, the first request message includes the management requirement information of the first node, and the first security module manages the first security module based on the management requirement information, for example, adjusts the capability unit in the first security module, and adds a new capability unit, to meet a security requirement proposed by the first node.

In a possible implementation, the first request message includes the management target information of the first security module, and the first security module manages the first security module based on the management target information, for example, creation, deletion, or status setting of the first security module, or managing the capability unit in the first security module, updating a profile based on adjustment on the capability unit, and the like.

It should be understood that, if the trusted policy does not include a requested trusted service, the first security module may generate a security service reject message, to reject a trusted service request.

S 1130: The first security module sends a first feedback message to the requester.

The first security module feeds back, to the requester, an execution result of the first security service and a management result of the first security module based on the first feedback message.

It may be understood that the first feedback message may alternatively be a trusted service reject message.

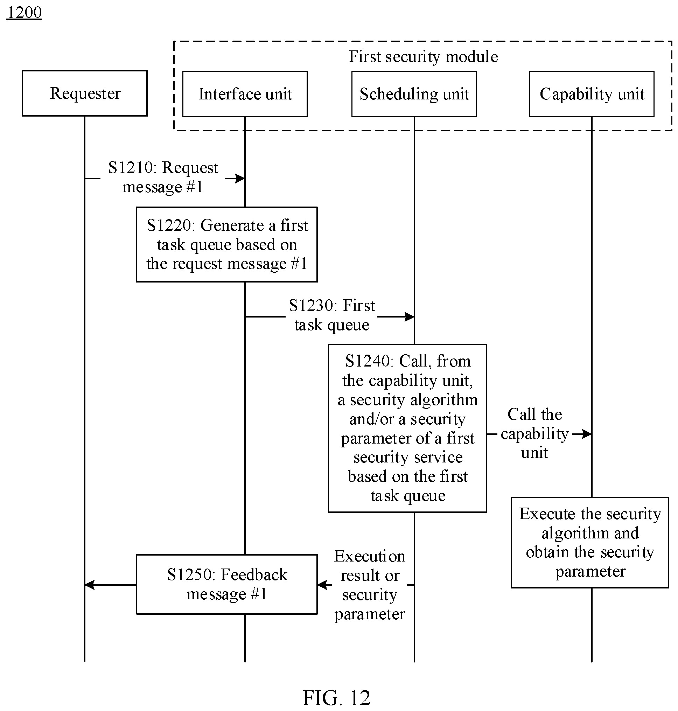

FIG. 12 is a diagram of a communication method 1200 applicable to this application. An internal interface of a first security module in FIG. 12 includes an interface unit, a scheduling unit, and a capability unit. In the communication method shown in FIG. 12, the internal interface of the first security module performs a trusted service procedure of a first security service. In other words, the trusted service procedure may be implemented by using the method 1100.

Specifically, the method 1200 for executing a trusted service by using the foregoing function units includes the following steps.

S1210: A requester sends a request message #1 to the interface unit of the first security module.

The request message #1 is used to request the first security service from the first security module.

The first security service may be one or more trusted services.

The requester may be a communication node, for example, a terminal device, an access network device, a core network device, or a third-party requester, or may be a second security module. This is not limited in embodiments of this application.

It should be understood that there may be a binding relationship between the requester and the first security module, that is, the first security module serves the requester. For example, the requester is a terminal device, and the first security module is a function module deployed in the terminal device. Alternatively, there may be no binding relationship between the requester and the first security module, that is, the first security module serves another device. For example, the requester is a terminal device, and the first security module is a function module deployed in an access network device. Alternatively, the requester may be the second security module. For example, the first security module is a module deployed in a terminal device, and the requester is a module deployed in an access network device. This is not limited in embodiments of this application.

When the requester is a first node, the request message #1 includes an identifier of a node #2, to indicate a destination node of a trusted service, for example, indicate a to-be-authenticated party in an authentication service or an attester in a trusted attestation service.

When the requester is the second security module, the request message #1 includes a security parameter that is used by the first security module to execute a specific security algorithm.

S1220: The interface unit generates a first task queue based on the request message #1.

Specifically, the interface unit determines a specific trusted service based on the request message #1, divides an execution procedure of the trusted service into a plurality of tasks at a fine granularity, and generates the first task queue. The first task queue indicates a sequence queue for executing the plurality of tasks.

S1230: The interface unit sends the first task queue to the scheduling unit.

S1240: The scheduling unit calls, from the capability unit, a security algorithm and/or a security parameter of the first security service based on the first task queue.

Specifically, the scheduling unit determines, based on the first task queue, a capability unit that needs to be called, and the corresponding capability unit executes a trusted algorithm or provides a security parameter. Then, the capability unit provides an execution result of the algorithm or the obtained security parameter for the scheduling unit.

For example, the scheduling unit determines a corresponding trusted policy based on the identifier of the node #2, determines a corresponding security parameter and a corresponding security algorithm according to the trusted policy, and then schedules a corresponding capability unit to perform algorithm calculation.

For example, the scheduling unit inputs the security algorithm based on the security parameter in the request message #1, and then schedules a corresponding capability unit to perform algorithm calculation.

S1250: The scheduling unit provides the execution result of the algorithm or the obtained security parameter for the interface unit, and the interface unit generates a feedback message #1 and sends the feedback message #1 to the requester.

The feedback message #1 includes an execution result of the trusted service.

It may be understood that the execution result of the trusted service may be a running result of a security algorithm, or may be a requested security parameter. This is not limited in embodiments of this application.

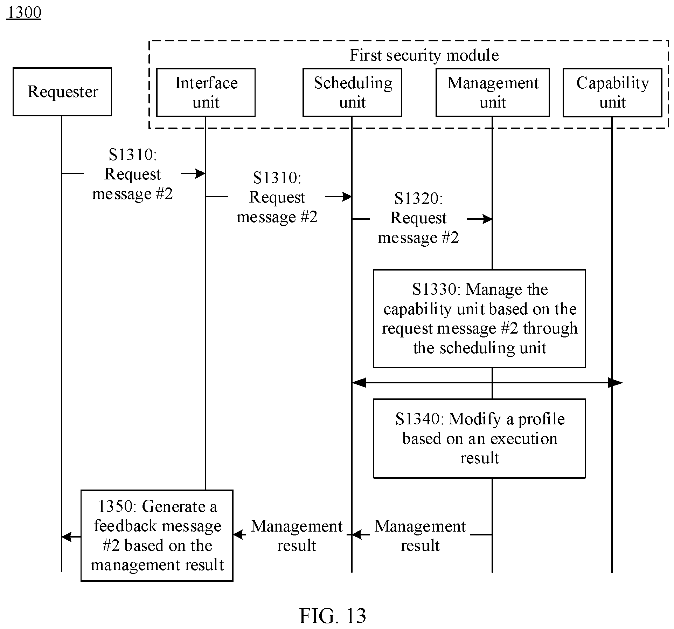

FIG. 13 is a diagram of a communication method 1300 applicable to this application. An internal function unit of a first security module in FIG. 13 includes an interface unit, a scheduling unit, and a capability unit, and may further include a management unit. The communication method shown in FIG. 13 is a service procedure in which an internal interface of the first security module performs trusted function management. In other words, a trusted function management service procedure may be implemented by using the method 1100.

Specifically, the method 1300 for executing a trusted function management service by using the foregoing function units includes the following steps.

S1310: A requester sends a request message #2 to the scheduling unit through the interface unit of the first security module.

The request message #2 is used to request trusted function management from the first security module.

When the requester is a first node, the request message #2 includes management requirement information of a node #1, to indicate a security requirement of the first node, and the first security module manages the first security module based on the management requirement information, for example, adjusts the capability unit in the first security module, and adds a new capability unit, to meet the security requirement proposed by the first node.

For example, the management requirement information includes a management type, a security requirement list of the requester, and the like. This is not limited in embodiments of this application.

When the requester is a second security module, the request message #1 includes management target information of the first security module, to indicate a management target of the first security module, for example, establishment, deletion, and status setting of the first security module, or managing the capability unit in the first security module, updating a profile based on adjustment on the capability unit, and the like.

For example, the management target information includes a name of a specific managed capability unit, an algorithm ID, and the like. This is not limited in embodiments of this application.

It should be understood that there may be a binding relationship between the requester and the first security module, that is, the first security module serves the requester. For example, the requester is a terminal device, and the first security module is a function module deployed in the terminal device. Alternatively, there may be no binding relationship between the requester and the first security module, that is, the first security module serves another device. For example, the requester is a terminal device, and the first security module is a function module deployed in an access network device. Alternatively, the requester may be the second security module. For example, the first security module is a module deployed in a terminal device, and the requester is a module deployed in an access network device. This is not limited in embodiments of this application.

S 1320: The scheduling unit sends the request message #2 to the management unit.

S 1330: The management unit manages the capability unit based on the request message #2 through the scheduling unit.

It should be understood that different capability units provide different security services, and a capability unit is configured based on a security requirement of the requester.

Specifically, the management unit determines the security requirement of the requester based on the management requirement information in the request message #2, to determine a to-be-managed capability unit.

Further, the management unit manages the capability unit through the scheduling unit.

For example, the scheduling unit may set or update a status or an attribute of the to-be-managed capability unit, or the scheduling unit may add or delete a capability unit.

For example, the scheduling unit may find the to-be-managed capability unit based on a name of the capability unit, an ID of the capability unit, or an address of the capability unit.

S 1340: The management unit modifies a profile based on an execution result.

Specifically, the management unit updates the profile based on a management result of the capability unit.

For example, some capability units are deleted, or some capability units are added.

S 1350: The interface unit generates feedback information #2 based on the management result.

The management unit sends the management result to the scheduling unit, and the scheduling unit sends the management result to the interface unit.

The interface unit generates the feedback message #2, and sends the feedback message #2 to the requester.

The feedback message #2 includes an execution result of trusted function management.

It may be understood that the execution result of trusted function management may be an update result of a capability unit corresponding to a trusted service requested by the requester. This is not limited in embodiments of this application.

For example, the feedback message #2 may be a management response message.

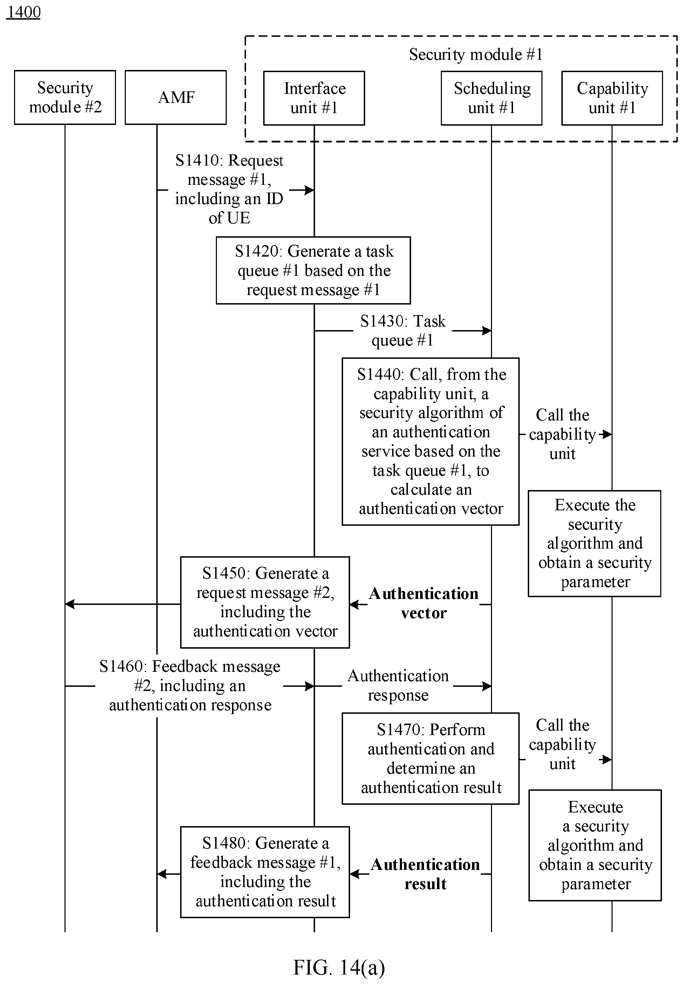

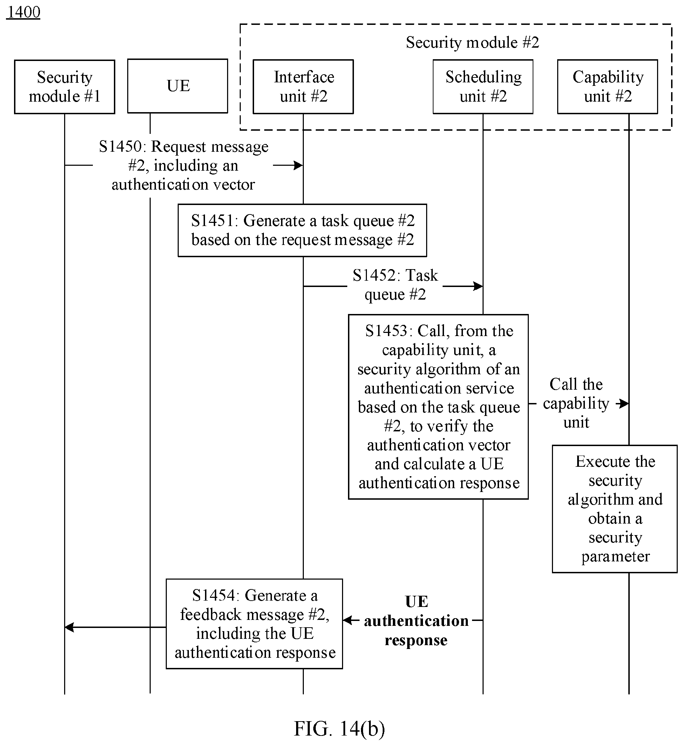

FIG. 14(a) and FIG. 14(b) are a flowchart of an authentication service applicable to a communication method in this application. An authentication service procedure shown in FIG. 14(a) and FIG. 14(b) may be one of first security services in the method shown in FIG. 12. In other words, the authentication service procedure may be implemented by using the method 1200. Specifically, the method 1400 includes the following steps.

In this embodiment, an example in which a core network and UE perform mutual authentication is used for description. A security module #1 is used as a security function module of the core network, and a security module #2 is used as a security function module of the UE. Specifically, there are two types of authentication services: an authentication service used by the core network to authenticate the UE and an authentication service used by the UE to authenticate the core network.

It should be noted that, before the authentication procedure, the UE, the security module #1, and a security module #2 of the core network first perform an intelligent trusted policy negotiation procedure, to obtain a trusted policy. The policy declares a used authentication algorithm.

The following step S1410 to step S1450 are an authentication service procedure in which an AMF authenticates the UE.

S1410: The AMF sends a request message #1 to an interface unit #1 of the security module #1.

The request message #1 is used to request an authentication service from the security module #1.

The request message #1 includes an identifier of the UE.

For example, the request message #1 may be an authentication service request message.

S1420: The interface unit #1 generates a task queue #1 based on the request message #1.

Specifically, the interface unit #1 may translate the request message #1, and generate the task queue #1.

S1430: The interface unit #1 sends the task queue #1 to a scheduling unit #1.

Specifically, the interface unit #1 sends the task queue #1 and the ID of the UE to the scheduling unit #1.

S1440: The scheduling unit #1 calls, from a capability unit #1, a security algorithm of the authentication service based on the task queue #1, to obtain an authentication response and an authentication vector through calculation.

Specifically, the scheduling unit #1 first obtains, from a root of trust module based on the task queue #1, an authentication parameter corresponding to the ID of the UE, then, calls a specific authentication algorithm in a basic password enabling module according to a stipulation of the trusted policy, inputs the authentication parameter, obtains an expected response (eXpected RESponse, XRES*) of an authentication response of the core network through calculation, and generates the authentication vector AV; and the scheduling unit stores the authentication response in the root of trust module, and sends the authentication vector to the interface unit #1.

The scheduling unit #1 determines a corresponding trusted policy based on the identifier of the node #2, determines a corresponding authentication parameter according to the policy, and inputs the authentication parameter into the authentication algorithm to generate the authentication vector through calculation.

It should be understood that the capability unit #1 in this application includes at least one capability unit, and a root of trust module #1 and a basic password enabling module #1 on a core network side are two capability units in the capability unit #1. In other words, in this embodiment, the scheduling unit calls two capability units: the root of trust module and the basic password enabling module.

The authentication vector may be understood as a parameter set of the authentication service.

For example, the authentication vector may include a random number RAND and an authentication token (AUthentication TokeN, AUTN).

S1450: The scheduling unit #1 sends the authentication vector to the interface unit #1, and the interface unit #1 generates a request message #2.

The interface unit #1 sends the request message #2 to the security module #2, to initiate an authentication service request. For a specific procedure, refer to FIG. 14(b). The interface unit #1 obtains an authentication response from an interface unit #2 of the security module #2.

It should be noted that, in this application, authentication between the core network and the UE is used as an example, and information transmission between the security module #1 and the security module #2 needs forwarding through a core network element, an access network device, and the UE. When two parties that perform authentication are different NFs in the core network, or an access network device and a core network element, or different access network devices, information transmission between the security module #1 and the security module #2 does not need forwarding through the core network element, the access network device, and the UE, but information may be directly interacted between security modules. A subsequent similar step, for example, S1460, is similar to this. Details are not described again.

S1460: The interface unit #1 receives the feedback message #2 from the interface unit #2, and sends the feedback message #2 to the scheduling unit #1.

After executing the authentication response, the security module #2 sends the feedback message #2 to the interface unit #1 through the interface unit #2, where the feedback message #2 includes an UE authentication response RES.

S1470: The scheduling unit #1 performs authentication and generates an authentication result.

Specifically, the scheduling unit #1 obtains the previously stored XRES from the root of trust module #1, calls the authentication algorithm of the basic password enabling module #1, and inputs the RES and the XRES, to obtain the authentication result.

S1480: The scheduling unit #1 sends the authentication result to the interface unit #1, and the interface unit #1 generates a feedback message #1 and sends the feedback message #1 to the AMF.

The feedback message #1 is used to feed back the authentication result to the AMF.

Step S1450 to step S1454 in FIG. 14(b) are a procedure in which the AMF requests the UE to perform an authentication service on a UE side.

S1450: The security module #1 sends a request message #2 to the security module #2.

The security module #2 receives the request message #2 through the interface unit #2.

The request message #2 is used to request the authentication service from the security module #2.

The request message #2 includes an authentication vector.

For example, the request message #2 may be a UE authentication service request message.

S1451: The interface unit #2 generates a task queue #2 based on the request message #2.

Specifically, the interface unit #2 may translate the request message #2, and generate the task queue #2.

S1452: The interface unit #2 sends the task queue #2 to a scheduling unit #2.

Specifically, the interface unit #2 sends the task queue #2 and the ID of the UE to the scheduling unit #2.

S1453: The scheduling unit #2 obtains a parameter of the authentication service from a root of trust module #2 based on the task queue #2, calls a security algorithm of the authentication service of a basic password enabling module #2 to verify the authentication vector, and calculates an authentication response on a UE side.

It should be understood that the capability unit #2 in this application includes at least one capability unit, and the root of trust module #2 and the basic password enabling module #2 on the UE side are two capability units in the capability unit #2. In other words, in this embodiment, the scheduling unit #2 calls two capability units: the root of trust module #2 and the basic password enabling module #2.

Specifically, the scheduling unit #2 calls, based on the task queue #2 and a stipulation of the trusted policy, a specific authentication algorithm to verify the authentication vector, to implement authentication on the core network by the UE; the scheduling unit #2 obtains the authentication parameter from the root of trust module #2; and the scheduling unit #2 inputs the authentication parameter and a parameter in the received authentication vector into the basic password enabling module #2, to obtain the UE authentication response through calculation. The authentication response RES is sent to the core network, and is used by the core network to perform authentication on the UE.

For example, the scheduling unit #2 calls the authentication algorithm to verify AUTN, so that the UE authenticates the network.

S1464: The scheduling unit #2 sends the UE authentication response to the interface unit #2, the interface unit #2 generates a feedback message #2, and the interface unit #2 sends the feedback message #2 to the security module #1.

The feedback message #2 includes the UE authentication response, and the authentication response is sent to the core network, and is used by the core network to perform authentication on the UE.

According to the foregoing technical solution, communication nodes that require an authentication service may perform an authentication procedure by using deployed security function modules, and an authentication vector and an authentication response may be exchanged only between the security function modules of the communication nodes, thereby further improving security. In this way, an independent security service is enabled in the communication nodes, and communication security performance is improved.

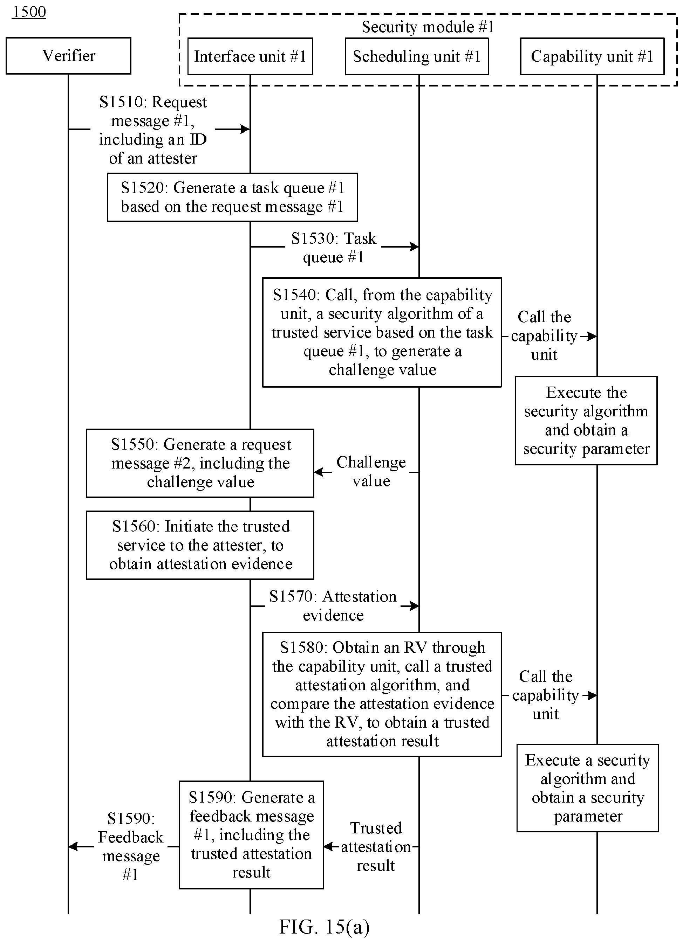

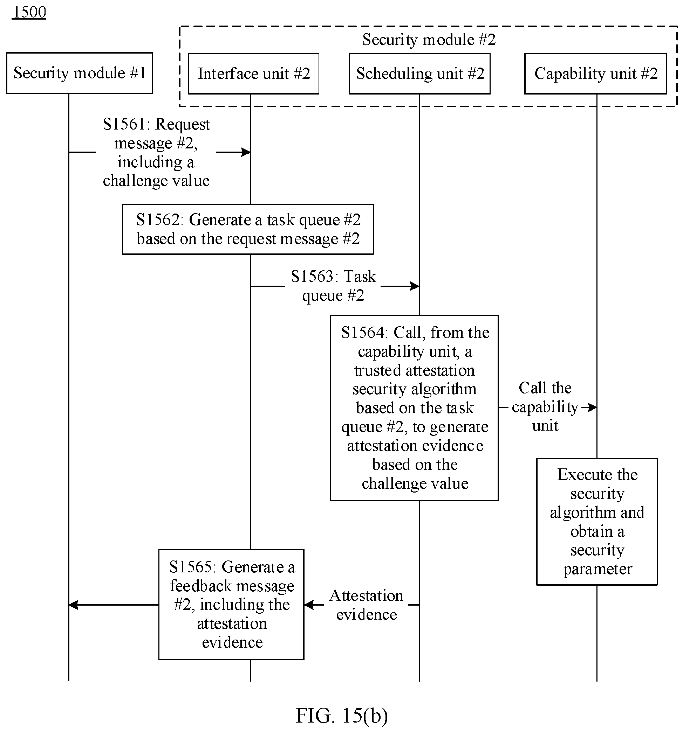

FIG. 15(a) and FIG. 15(b) are a flowchart of a trusted attestation service applicable to a communication method in this application. A trusted attestation service procedure shown in FIG. 15(a) and FIG. 15(b) may be one of first security services in the method shown in FIG. 12. In other words, the trusted attestation service procedure may be implemented by using the method 1200. Specifically, the method 1500 includes the following steps.

In this embodiment, trusted attestation between a verifier verifier and an attester attester is used as an example for description. The verifier/attester may be UE, a RAN, or an NF. A security module #1 is used as a security function module of the verifier, and a security module #2 is used as a security function module of the attester.

It should be noted that, before the trusted attestation procedure, the security module #1 and the security module #2 first perform an intelligent trusted policy negotiation procedure to obtain a trusted policy. The policy declares a used trusted attestation algorithm.

The following step S1510 to step S1590 are the trusted attestation service procedure between the verifier and the attester.

S1510: The verifier sends a request message #1 to an interface unit #1 of the security module #1.

The request message #1 is used to request the trusted attestation service from the security module #1.

The request message #1 includes an identifier of the attester.

For example, the request message #1 may be a trusted attestation service request message.

In a possible implementation, a requester may first initiate a trusted attestation service request to the verifier.

In a possible implementation, the verifier or the attester may directly trigger the trusted attestation procedure.

For example, UE adds a verification service request message verification service request to a registration request message, and requires a core network to perform trusted attestation on the UE in an access process of the UE, or the core network adds the verification service request to a registration response message.

S1520: The interface unit #1 generates a task queue #1 based on the request message #1.

Specifically, the interface unit #1 may translate the request message #1, and generate the task queue #1.

S1530: The interface unit #1 sends the task queue #1 to a scheduling unit #1.

Specifically, the interface unit #1 sends the task queue #1 and the ID of the attester to the scheduling unit #1.

S1540: The scheduling unit #1 calls, from a capability unit #1, a security algorithm of a trusted service based on the task queue #1, to generate a challenge value through calculation.

Specifically, the scheduling unit #1 first obtains, from a root of trust module #1 based on the task queue #1, a trusted attestation parameter corresponding to the ID of the attester; and then calls, according to a stipulation of the trusted policy, a trusted attestation algorithm of a measurement enabling module #1, inputs the authentication parameter, and generates the challenge value through calculation.

The scheduling unit #1 determines a corresponding trusted policy based on the identifier of the attester, determines a corresponding trusted attestation parameter according to the policy, and inputs the trusted attestation parameter into the trusted attestation algorithm to generate the challenge value through calculation.

It should be understood that the capability unit #1 in this application includes at least one capability unit, and the root of trust module #1 and the measurement enabling module #1 on a verifier side are two capability units in the capability unit #1. In other words, in this embodiment, the scheduling unit calls the two capability units: the root of trust module #1 and the measurement enabling module #1.

S1550: The scheduling unit #1 sends the challenge value to the interface unit #1, and the interface unit #1 generates a request message #2.

The interface unit #1 initiates a trusted service request to the security module #2. For a specific procedure, refer to FIG. 15(b). The interface unit #1 obtains attestation evidence from an interface unit #2 of the security module #2.

S1570: The interface unit #1 sends the attestation evidence to the scheduling unit #1.

S1580: The scheduling unit #1 obtains a reference value RV through the capability unit #1, calls a security algorithm of a trusted service from the capability unit #1, and compares the attestation evidence with the reference value, to obtain a trusted attestation result.

Specifically, the scheduling unit #1 obtains the reference value RV from the root of trust module #1, calls a trusted attestation security algorithm from the measurement enabling module #1, and compares the attestation evidence with the reference value, to obtain the trusted attestation result.

S1590: The scheduling unit #1 sends the trusted attestation result to the interface unit #1, and the interface unit #1 generates a feedback message #1 and sends the feedback message #1 to the verifier, where the feedback message #1 includes the trusted attestation result of the attester.

The security module #1 sends the trusted attestation result of a node #2 to a node #1 based on the feedback message #1.

For example, the feedback message #1 may be a trusted attestation service response message.

The following is a procedure in which the security module #1 requests the attestation evidence from the security module #2.

S1561: The security module #1 sends the request message #2 to the interface unit #2 of the security module #2.

The request message #2 is used to request the trusted attestation evidence from the security module #2.

The request message #2 includes the challenge value.

For example, the request message #2 may be an attestation evidence obtaining service request message.

It should be noted that, in this application, trusted attestation between NFs of a core network is used as an example, and information transmission between the security module #1 and the security module #2 does not need forwarding through a core network element, an access network device, and UE, and information is directly exchanged between the security module #1 and the security module #2. When two parties of trusted attestation are respectively the core network element and the UE, information transmission between the security module #1 and the security module #2 needs forwarding through the core network element, the access network device, and the UE. A subsequent similar step, for example, S1565 is similar to this. Details are not described again.

S1562: The interface unit #2 generates a task queue #2 based on the request message #2.

Specifically, the interface unit #2 may translate the request message #2, and generate the task queue #2.

S1563: The interface unit #2 sends the task queue #2 to a scheduling unit #2.

Specifically, the interface unit #2 sends the task queue #2, an ID of the verifier, and the challenge value to the scheduling unit #2.

S1564: The scheduling unit #2 calls, from a capability unit #2 based on the task queue #2, the security algorithm of the trusted service, to generate the attestation evidence based on the challenge value.

Specifically, the scheduling unit #2 first obtains a trusted attestation parameter from a root of trust module #2 based on the task queue #2; and then calls, according to a stipulation of the trusted policy, a trusted attestation algorithm of a measurement enabling module #2, inputs the authentication parameter, and generates the challenge value through calculation.

It should be understood that the capability unit #2 in this application includes at least one capability unit, and the root of trust module #2 and the measurement enabling module #2 on an attester side are two capability units in the capability unit #2. In other words, in this embodiment, the scheduling unit #2 calls the two capability units: the root of trust module #2 and the measurement enabling module #2.

S1565: The scheduling unit #2 sends the attestation evidence to the interface unit #2, and the interface unit #2 generates a feedback message #2.

The feedback message #2 is used to send the generated attestation evidence to the security module #1. The attestation evidence is used by the security module #1 to determine the trusted attestation result.

According to the foregoing technical solution, communication nodes that require a trusted attestation service may perform a trusted attestation procedure by using deployed security function modules, and the attestation evidence, the reference value, the challenge value, and the like may be exchanged only between the security function modules of the communication nodes, thereby further improving security. In this way, an independent security service is enabled in the communication nodes, and communication security performance is improved.

FIG. 16(a)-1, FIG. 16(a)-2, and FIG. 16(b) are a flowchart of an authorization service applicable to a communication service in this application. An authorization service procedure shown in FIG. 16(a)-1, FIG. 16(a)-2, and FIG. 16(b) may be one of first security services in the method shown in FIG. 12. In other words, the authorization service procedure may be implemented by using the method 1200. Specifically, the method 1600 includes the following steps.

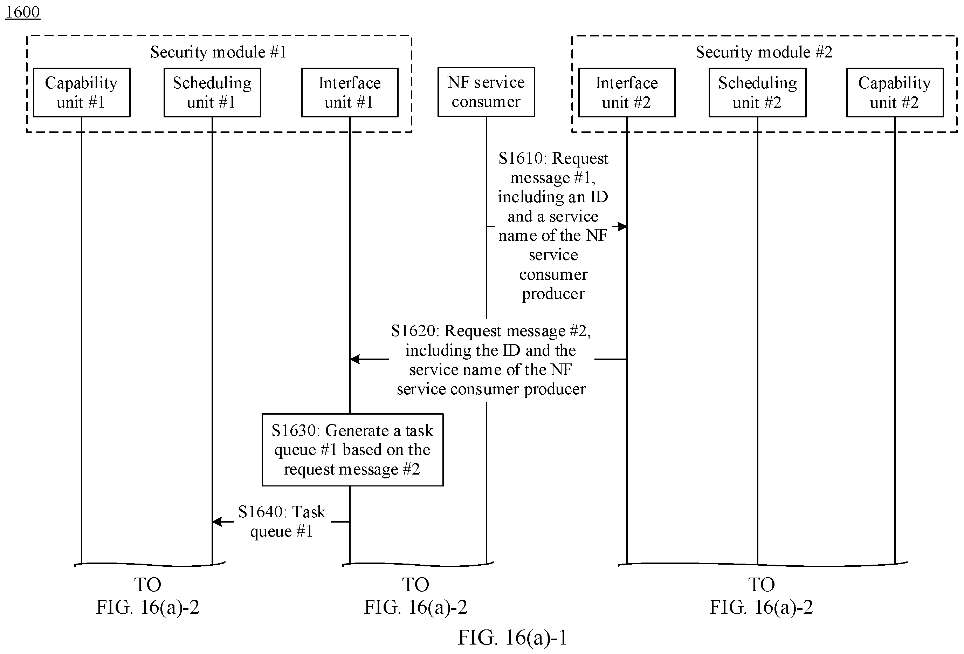

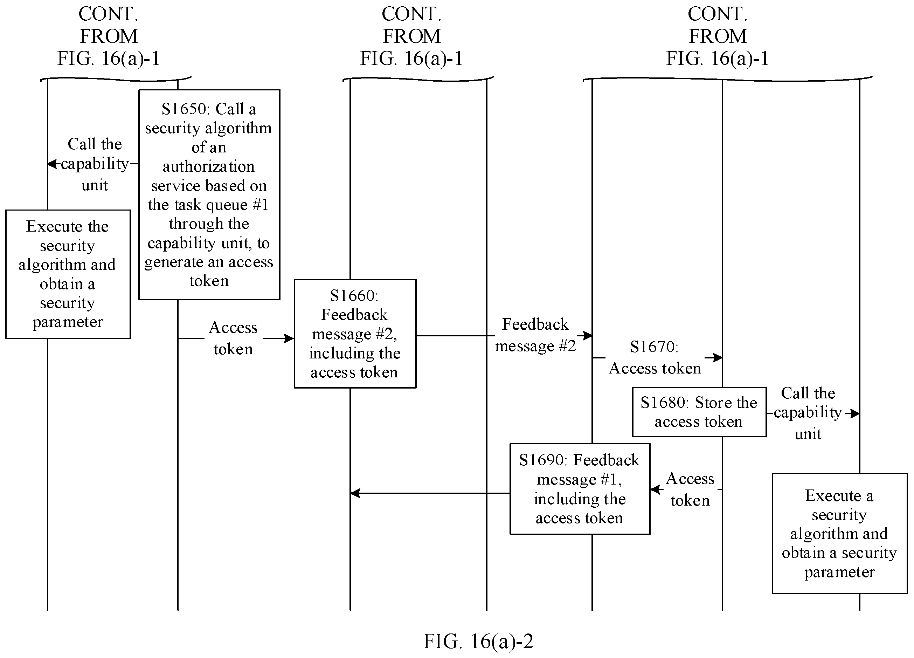

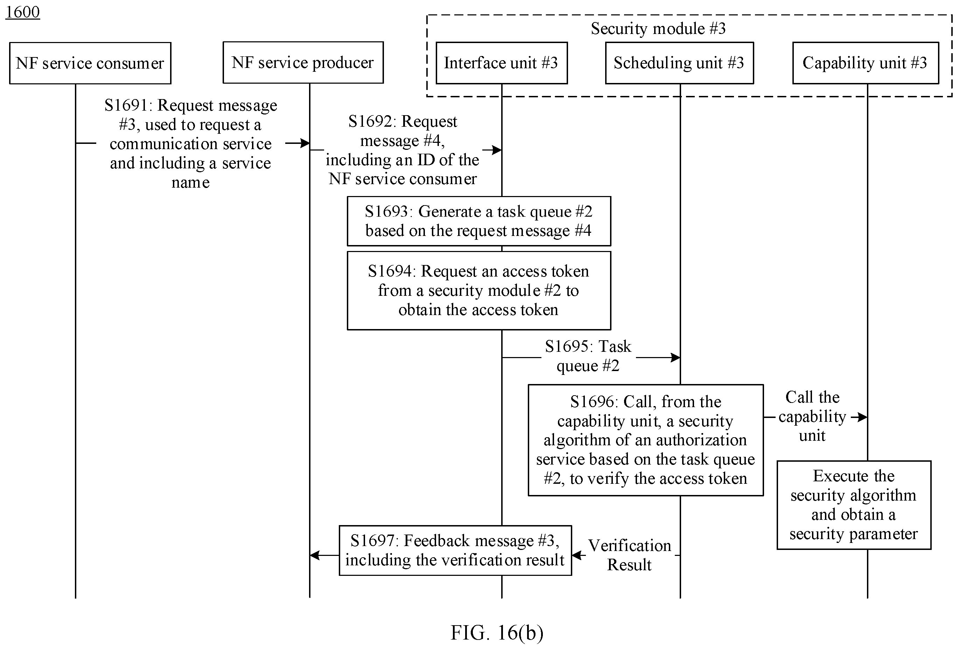

In this embodiment, an example of the authorization service procedure is as follows: An NF service consumer NF service consumer initiates a token token application service to a security module #1 of an authorization server AuthServer (steps shown in FIG. 16(a)-1, FIG. 16(a)-2), and an NF service producer NF service producer verifies a token service (steps shown in FIG. 16(b)). The AuthServer/consumer/producer may all be NFs. The security module #1 is used as a security function module of the AuthServer, a security module #2 is used as a security function module of the NF service consumer, and a security module #3 is used as a security function module of the NF service producer.

Steps S1610 to S1691 are a procedure of obtaining and storing an access token.

It should be noted that, before the authorization service procedure, the security module #1 and the security module #2 first perform an intelligent trusted policy negotiation procedure to obtain a trusted policy. The policy declares a used authorization service algorithm.

S1610: The NF service consumer sends a request message #1 to an interface unit #2 of the security module #2.

The request message #1 is used to request an authorization service from the security module #2.

The request message #1 includes an identifier and a service name of the NF service producer, and the service name is a name of a service requested by the NF service consumer from the NF service producer.

For example, the request message #1 may be an access token application request message.

S1620: The interface unit #2 sends a request message #2 to an interface unit #1 of the security module #1.

The request message #2 is used to request an authorization service from the security module #1.

The request message #2 includes the identifier and the service name of the NF service producer.

For example, the request message #2 may be an access token generation request message.

It should be noted that, in this application, an authorization service between NFs of a core network is used as an example, and information transmission between the security module #1 and the security module #2 does not need forwarding through a core network element, an access network device, and UE, and information is directly exchanged between the security module #1 and the security module #2. When two parties of the authorization service are respectively the core network element and the UE, information transmission between the security module #1 and the security module #2 needs forwarding through the core network element, the access network device, and the UE. A subsequent similar step, for example, S1660, is similar to this. Details are not described again.

S1630: The interface unit #1 generates a task queue #1 based on the request message #2.

Specifically, the interface unit #1 may translate the request message #2, and generate the task queue #1.

S1640: The interface unit #1 sends the task queue #1 to a scheduling unit #1.

Specifically, the interface unit #1 sends the task queue #1 and the identifier of the NF service producer to the scheduling unit #1.

S1650: The scheduling unit #1 calls, from a capability unit #1, a security algorithm of the authorization service based on the task queue #1, to generate an access token through calculation.

Specifically, the scheduling unit #1 first obtains, from a root of trust module #1 based on the task queue #1, a security parameter of an authorization service corresponding to the ID of the NF service producer, and then calls, according to a stipulation of the trusted policy, a security algorithm of the authorization service of an authorization module #1, to generate the access token through calculation.

Specifically, the scheduling unit #1 determines a corresponding trusted policy based on the identifier of the NF service producer, determines a security parameter of a corresponding authorization service according to the trusted policy, and inputs the security parameter into the authorization algorithm, to generate the access token.

It should be understood that the capability unit #1 in this application includes at least one capability unit, and the root of trust module #1 and the authorization module #1 on an AuthServer side are two capability units in the capability unit #1. In other words, in this embodiment, the scheduling unit #1 calls two capability units: the root of trust module #1 and the authorization module #1.

S1660: The scheduling unit #1 sends the access token to the interface unit #1, and the interface unit #1 generates a feedback message #2 and sends the feedback message #2 to the interface unit #2.

The feedback message #2 is used to send the generated access token to the interface unit #2.

The feedback message #2 includes the access token.

For example, the feedback message #2 may be an access token generation response message.

S1670: The interface unit #2 sends the access token to a scheduling unit #2.

For example, the access token may be sent through a token storage request message.

S1680: The scheduling unit #2 stores the access token in a capability unit #2.

Specifically, the scheduling unit #2 stores the access token in a root of trust module #2.

It should be understood that the capability unit #2 in this application includes at least one capability unit, and the root of trust module #2 and an authorization module #2 on an NF service consumer side are two capability units in the capability unit #2. In other words, in this embodiment, the scheduling unit #2 calls two capability units: the root of trust module #2 and the authorization module #2.

S1690: The scheduling unit #2 sends the access token to the interface unit #2, and the interface unit #2 generates a feedback message #1 and sends the feedback information #1 to the security module #1.

The feedback message #1 is used to feed back a result of obtaining the access token to the NF service consumer.

The feedback message #1 includes the service name and the ID of the NF service producer.

For example, the feedback message #1 may be an access token response message.

The following steps S1691 to S1697 are a verification service procedure of the access token.

It should be noted that, before the authorization service procedure, the security module #3 and the security module #2 first perform an intelligent trusted policy negotiation procedure to obtain a trusted policy. The policy declares a used authorization service algorithm.

S1691: The NF service consumer sends a request message #3 to the NF service producer.

Specifically, the request message #3 is used to request a communication service from the NF service producer, and the request message #3 includes a name of the requested communication service. This step of the NF service producer may be understood as a trigger condition of the following trusted service.

S1692: The NF service producer sends a request message #4 to an interface unit #3 of the security module #3.

The request message #4 is used to request an authorization service from the security module #3.

It may be understood that the NF service producer initiates an access token verification service request to the security module #3, namely, the service requested by the request message #4.

The request message #4 includes an identifier of the NF service consumer.

For example, the request message #4 may be an access token verification request message.

S1693: The interface unit #3 generates a task queue #2 based on the request message #4.

Specifically, the interface unit #3 may translate the request message #4, and generate the task queue #2.

S1694: The interface unit #3 may request the access token from the security module #2, to obtain the access token generated by the security module #2.

Specifically, the interface unit #3 sends a token generation obtaining request message to the security module #2, where the message includes a name of a communication service, and the security module #2 executes an authorization service based on the request message to obtain the access token, and feeds back the obtained access token to the security module #3 through a feedback message.

S1695: The interface unit #3 sends the task queue #2 and the obtained access token to a scheduling unit #3.

Specifically, the interface unit #3 sends the task queue #2 and the ID of the NF service consumer to the scheduling unit #3.

S1696: The scheduling unit #3 calls, from a capability unit #3, a security algorithm of an authorization service based on the task queue #2, to verify the access token.

Specifically, the scheduling unit #3 first obtains, from a root of trust module #3 based on the task queue #2, a parameter corresponding to the ID of the NF service producer, and then calls, according to a stipulation of the trusted policy, an authorization service algorithm of an authorization module #3 to verify the access token.

It should be understood that the capability unit #3 in this application includes at least one capability unit, and the root of trust module #2 and the authorization module #2 on an NF service producer side are two capability units in the capability unit #2. In other words, in this embodiment, the scheduling unit #2 calls two capability units: the root of trust module #2 and the authorization module #2.

S1697: The scheduling unit #3 sends a result of the access token to the interface unit #3, and the interface unit #3 generates a feedback message #3 and sends the feedback message #3 to the NF service producer.

The feedback message is used to send a verification result of the access token to the NF service producer.

According to the foregoing technical solution, communication nodes that require a network authorization service may execute an authorization service procedure by using deployed security function modules, and the access token may be exchanged only between the security function modules of the communication nodes, thereby further improving security. In this way, an independent security service is enabled in the communication nodes, and communication security performance is improved.

FIG. 17(a) and FIG. 17(b) are a flowchart of an encryption/decryption service applicable to a communication method in this application. An encryption/decryption service procedure shown in FIG. 17(a) and FIG. 17(b) may be one of first security services in the method shown in FIG. 12. In other words, the encryption/decryption service procedure may be implemented by using the method 1200. Specifically, the method 1700 includes the following steps.

In this embodiment, an example in which UE performs an encryption service and an access network device performs a decryption service is used for description. A security module #1 is used as a security function module of the UE, and a security module #2 is used as a security function module of the access network device.

It should be noted that, before the encryption/decryption service is performed, the UE and the access network device first perform an intelligent trusted policy negotiation procedure to obtain a trusted policy. The policy declares a used encryption algorithm or a used decryption algorithm.

In this embodiment, FIG. 17(a) is an encryption procedure, and FIG. 17(b) shows a decryption procedure.

Specific steps of the encryption procedure shown in FIG. 17(a) are as follows:

S1710: The UE sends a request message #1 to an interface unit #1 of the security module #1.

The request message #1 is used to request an encryption service from the security module #1.

The request message #1 includes a to-be-encrypted plaintext message.

For example, the request message #1 may be an encryption service request message.

S1720: The interface unit #1 generates a task queue #1 based on the request message #1.

Specifically, the interface unit #1 may translate the request message #1, and generate the task queue #1.

S1730: The interface unit #1 sends the task queue #1 to a scheduling unit #1.

Specifically, the interface unit #1 sends the task queue #1 and the plaintext message to the scheduling unit #1.

S1740: The scheduling unit #1 calls, from a capability unit #1, a security algorithm of the encryption service based on the task queue #1, to perform encryption to obtain a ciphertext.

Specifically, the scheduling unit #1 first obtains an encryption key from a root of trust module #1 based on the task queue #1, calls an encryption algorithm of an encryption module #1 according to a stipulation of the trusted policy, and inputs the plaintext message and the encryption key, to obtain a ciphertext message through calculation.

Specifically, the scheduling unit #1 determines an identifier of the UE based on the request message #1, determines a corresponding trusted policy based on the identifier, determines the encryption key according to the trusted policy, and inputs the encryption key and the plaintext message into the encryption algorithm, to generate the ciphertext message.

The request message #1 may include the identifier of the UE, or a message header of the request message #1 includes an identifier indication of the UE. This is not limited in this application.

It should be understood that the capability unit #1 in this application includes at least one capability unit, and the root of trust module #1 and the encryption module #1 on a terminal side are two capability units in the capability unit #1. In other words, in this embodiment, the scheduling unit #1 calls the two capability units: the root of trust module #1 and the encryption module #1.

S1750: The scheduling unit #1 sends the ciphertext message to the interface unit #1, and the interface unit #1 generates a feedback message #1 and sends the feedback message #1 to the UE.

The feedback message #1 is used to feed back an encryption result to the UE, that is, feed back the ciphertext message.

The feedback message #1 includes the ciphertext message.

For example, the feedback message #1 may be an encryption service response message.

The foregoing steps S1710 to S1750 are a process in which the UE requests encryption from a security function module deployed in the UE.

The following describes a process in which the access network device performs decryption by using a security function module deployed in the access network device.

Specific steps of the decryption procedure shown in FIG. 17(b) are as follows:

S1760: The access network device sends a request message #2 to an interface unit #2 of the security module #2.

The request message #2 is used to request a decryption service from the security module #2.

The request message #2 includes a to-be-decrypted ciphertext message.

For example, the request message #2 may be a decryption service request message.

S1770: The interface unit #2 generates a task queue #2 based on the request message #2.

Specifically, the interface unit #2 may translate the request message #2, and generate the task queue #2.

S1780: The interface unit #2 sends the task queue #2 to a scheduling unit #2.

Specifically, the interface unit #2 sends the task queue #2 and the ciphertext message to the scheduling unit #2.

S1790: The scheduling unit #2 calls, from a capability unit #2, a security algorithm of a decryption service based on the task queue #2, to perform decryption to obtain a plaintext.

Specifically, the scheduling unit #2 first obtains a decryption key from a root of trust module #2 based on the task queue #2, calls a decryption algorithm of a decryption module #2 according to a stipulation of the trusted policy, and inputs the ciphertext message and the decryption key, to obtain a plaintext message through calculation.

Specifically, the scheduling unit #2 determines an identifier of the access network device based on the request message #2, determines a corresponding trusted policy based on the identifier, determines the decryption key according to the trusted policy, and inputs the decryption key and the ciphertext message into the decryption algorithm, to generate the plaintext message.

The request message #2 may include the identifier of the access network device, or a message header of the request message #2 includes an identifier indication of the access network device. This is not limited in this application.

It should be understood that the capability unit #2 in this application includes at least one capability unit, and the root of trust module #2 and the encryption module #2 on an access network side are two capability units in the capability unit #2. In other words, in this embodiment, the scheduling unit #2 calls the two capability units: the root of trust module #2 and the decryption module #2.

S1791: The scheduling unit #2 sends the plaintext message to the interface unit #2, and the interface unit #2 generates a feedback message #2 and sends the feedback message #2 to the UE.

The feedback message #2 is used to feed back a decryption result to the access network device, that is, feed back the plaintext message.

The feedback message #2 includes the plaintext message.

For example, the feedback message #2 may be a decryption service response message.

It should be understood that the foregoing encryption procedure and decryption procedure are merely examples for description. An encryption/decryption service procedure may be implemented between any communication nodes by using deployed security function modules. In addition, the encryption service and the decryption service are independently performed based on a service requirement. This is not limited in embodiments of this application.

In a possible implementation, a security function module is integrated with a communication node. For example, the security function module is deployed together with the access network device in a form of a security component, an encryption card, a decryption card, or the like.

In a possible implementation, the access network device may be divided into a CU unit and a DU unit. In this case, a security function module may be deployed in the CU unit, may be deployed in the DU unit, or may be deployed in the CU unit and the DU unit.

If the security function module is deployed in both the CU unit and the DU unit, an encryption/decryption service procedure is the same as the procedure in FIG. 8.

If the security function module is deployed only in the CU unit, an encryption process is initiated by the CU unit, and encryption is implemented on the corresponding security function module, to obtain a ciphertext message; and a decryption process is directly performed by the DU unit.

According to the foregoing technical solution, communication nodes that require an encryption/decryption service may perform an encryption/decryption procedure by using deployed security function modules, thereby improving security. In this way, an independent security service is enabled in the communication nodes, and communication security performance is improved.

FIG. 18(a) and FIG. 18(b) are a flowchart of a service that is used for uploading data to or downloading data from a blockchain and that is applicable to this application. A data upload service or download service procedure shown in FIG. 18(a) and FIG. 18(b) may be one of first security services in the method shown in FIG. 12. In other words, a service procedure of uploading data to or downloading data from the blockchain may be implemented by using the method 1200. Specifically, the method 1800 includes the following steps.

In this embodiment, an NF that needs to upload data to the blockchain or needs to download data from the blockchain may request a data upload service or a data download service from a security function module of a core network. A security module #1 is used as a security function module of a core network device.

In this embodiment, FIG. 18(a) shows a service procedure of uploading data to the blockchain, and FIG. 18(b) shows a procedure of downloading data from the blockchain.

Specific steps that are of the service for uploading data to the blockchain and that are shown in FIG. 18(a) are as follows:

S1810: The NF sends a request message #1 to an interface unit #1 of the security module #1.

The request message #1 is used to request, from the security module #1, to upload data to the blockchain.

The request message #1 includes to-be-uploaded data.

For example, the request message #1 may be a blockchain data upload request message.

It may be understood that the NF may be an NF that needs to upload data to the blockchain.

S1820: The interface unit #1 generates a task queue #1 based on the request message #1.

Specifically, the interface unit #1 may translate the request message #1, and generate the task queue #1.

S1830: The interface unit #1 sends the task queue #1 to a scheduling unit #1.

Specifically, the interface unit #1 sends the task queue #1 and the to-be-uploaded data to the scheduling unit #1.

S1840: The scheduling unit #1 calls, from a capability unit #1, a security algorithm based on the task queue #1 to process the to-be-uploaded data.

Specifically, the scheduling unit #1 first calls, based on the task queue #1, a specific security algorithm to verify whether the NF has permission to upload data to the blockchain, then calls a specific security algorithm according to a stipulation of a trusted policy, inputs the to-be-uploaded data into the specific security algorithm, and packs the to-be-uploaded data into a ledger data format for processing.

Optionally, the scheduling unit #1 may further call an encryption and integrity protection algorithm to further process the data.

S1850: The scheduling unit #1 uploads the processed data to the blockchain through the interface unit #1.

S1860: The interface unit #1 sends a feedback message #1 to the NF.

The feedback message #1 is used to feed back a data upload result to a node #1.

For example, the feedback message #1 may be a blockchain data upload response message.

The foregoing steps S1810 to S1860 are a service process in which the NF network element requests a security function module deployed in the core network to upload data to the blockchain.

The following describes a service process in which the NF network element requests, by using a security function module deployed in the core network, to download data from the blockchain.

Specific steps that are of the service for downloading data from the blockchain and that are shown in FIG. 18(b) are as follows:

S1870: The NF sends a request message #2 to the interface unit #1 of the security module #1.

The request message #2 is used to request, from the security module #1, a service for downloading data from the blockchain.

The request message #2 includes indication information of the data downloaded from the blockchain.

For example, the indication information of the data may be a data name, a data type, a data identifier, or the like.

For example, the request message #2 may be a blockchain data download request message.

S1880: The interface unit #1 generates a task queue #2 based on the request message #2.

Specifically, the interface unit #1 may translate the request message #2, and generate the task queue #2.

S1890: The interface unit #1 sends the task queue #2 to the scheduling unit #1.

Specifically, the interface unit #1 sends the task queue #2 and the to-be-uploaded data to the scheduling unit #1.

S1891: The scheduling unit #1 calls, from the capability unit #1, a security algorithm based on the task queue #2, to download the requested data from the blockchain.

Specifically, the scheduling unit #1 first calls, based on the task queue #2, a specific security algorithm to verify whether the NF has permission to download data from the blockchain, and then calls, according to a stipulation of the trusted policy, the specific security algorithm to download the requested data from the blockchain.

S1892: The scheduling unit #1 downloads the requested data from the blockchain through the interface unit #1.

S1893: The interface unit #1 sends a feedback message #2 to the NF.

The feedback message #2 is used to feed back a data download result to the node #1.

The feedback message includes the downloaded data or indicates that data fails to be downloaded or is successfully downloaded.

For example, the feedback message #2 may be a blockchain data download response message.

According to the foregoing technical solution, a communication node that requires a service for uploading data to or downloading data from the blockchain may perform a data upload or download service procedure by using a deployed security function module, and the security function module independently performs data processing processes such as permission authentication and data format conversion, thereby improving security. In this way, an independent security service is enabled in the communication node, and communication security performance is improved.

The foregoing describes in detail the methods provided in embodiments of this application with reference to FIG. 11 to FIG. 18(a) and FIG. 18(b). The following describes in detail apparatuses provided in embodiments of this application with reference to FIG. 19 and FIG. 20. It should be understood that descriptions of apparatus embodiments correspond to the descriptions of the method embodiments. Therefore, for content that is not described in detail, refer to the method embodiments. For brevity, details are not described herein again.

FIG. 19 is a block diagram of a communication apparatus according to an embodiment of this application. A communication apparatus 1900 shown in FIG. 19 includes an interface unit 1910 and a processing unit 1920. The interface unit 1910 may communicate with the outside, and the processing unit 1920 is configured to process data. The interface unit 1910 may also be referred to as a communication interface or a communication unit.

Optionally, the interface unit 1910 may include a sending unit and a receiving unit. The sending unit is configured to perform a sending operation in the foregoing method embodiments. The receiving unit is configured to perform a receiving operation in the foregoing method embodiments.

It should be noted that the communication apparatus 1900 may include a sending unit, but does not include a receiving unit. Alternatively, the communication apparatus 1900 may include a receiving unit, but does not include a sending unit. This specifically depends on whether the foregoing solution performed by the communication apparatus 1900 includes a sending action and a receiving action.

Optionally, the communication apparatus 1900 may further include a storage unit, the storage unit may be configured to store instructions and/or data, and the processing unit 1920 may read the instructions and/or the data in the storage unit.

In a design, the communication apparatus 1900 may be configured to perform an action performed by the first security module in the foregoing method embodiments.

Optionally, the communication apparatus 1900 may perform an action performed by the first security module in the foregoing method embodiments. The first security module may be a security function unit, module, or device, may be a chip or a circuit in a security function unit, module, or device, or may be a logical module or software that can implement all or some functions of a security function unit, module, or device. This is not limited in this application.

Optionally, the communication apparatus 1900 may be a first security module, the interface unit 1910 is configured to perform a receiving or sending operation of the first security module in the foregoing method embodiments, and the processing unit 1920 is configured to perform an internal processing operation of the first security module in the foregoing method embodiments.

Optionally, the communication apparatus 1900 may be a device including the first security module. Alternatively, the communication apparatus 1900 may be a component configured in the first security module, for example, a chip in the first security module. In this case, the interface unit 1910 may be an interface circuit, a pin, or the like. Specifically, the interface circuit may include an input circuit and an output circuit, and the processing unit 1920 may include a processing circuit.

In a possible implementation, the processing unit 1920 is configured to execute a first security service or manage the first security module based on a first request message sent by a requester, where the first security service is used to call a security capability, the requester includes a first node, a second node, or a second security module, the first security module is a module serving the first node, and the second security module is a module serving the second node; and the interface unit 1910 is configured to send a first feedback message to the requester, where the first feedback message is used to feed back, to the requester, an execution result of the first security service or a management result of the first security module.

In a possible implementation, the requester is the first node, and the first request message includes an identifier of the second node or management requirement information of the first node.

In a possible implementation, the requester is the second security module, and the first request message includes a security parameter or management target information of the first security module.

In a possible implementation, the first security module includes a first module and/or a second module, the first module is configured to perform at least one of the following operations: calling a security algorithm, obtaining a security parameter, or requesting a second security service from the second security module, and the second module is configured to manage the first security service or the first module.

In a possible implementation, the processing unit 1920 includes a scheduling unit and a capability unit, the first request message includes an identifier of the second node, and the scheduling unit is configured to call a security algorithm of the first security service and/or obtain a parameter of the first security service based on the first request message through the capability unit.

In a possible implementation, the processing unit 1920 further includes the capability unit; the interface unit is further configured to receive the first request message from the requester, where the first request message includes the first security service requested by the requester; the interface unit is further configured to: generate a first task queue based on the first request message, and send the first task queue to the scheduling unit; the scheduling unit is specifically configured to call the security algorithm of the first security service and/or obtain the parameter of the first security service based on the first task queue through the capability unit; and the scheduling unit is further configured to send an execution result to the interface unit.

In a possible implementation, the processing unit 1920 includes a scheduling unit, a management unit, and a capability unit, the first request message includes the management requirement information of the first node or the management target information of the first security module, and the management unit is specifically configured to manage the capability unit based on the first request message through the scheduling unit.

In a possible implementation, the interface unit 1910 is further configured to: receive the first request message from the requester, and send the first request message to the scheduling unit, where the first request message includes management request information sent by the requester; the scheduling unit is further configured to send the first request message to the management unit; the management unit is further configured to manage the capability unit based on the first request message through the scheduling unit; the management unit is further configured to: modify a profile, and send a management response message to the interface unit through the scheduling unit; and the interface unit is further configured to send the management response message to the requester, where the management response message is used to feed back a management result of a management request to the requester.

In a possible implementation, when the first module serves the requester, the requester is a terminal device, and the first module is deployed in the requester, or the first module is deployed outside the requester.

In a possible implementation, when the first module and/or the second module serve/serves the requester, the requester is an access network device, and the first module and/or the second module are/is deployed in the requester, or the first module and/or the second module are/is deployed outside the requester.

In a possible implementation, when the first module and/or the second module serve/serves the requester, the requester is a core network device, and the first module and the second module are deployed as network functions of a core network.

In a possible implementation, the first security module communicates with the requester through a first interface, the first interface is used by the requester to initiate a request for the first security service, and the first interface is further used by the first security module to send a response for executing the first security service; and when the first security module serves the requester, the first interface is further used by the requester to initiate a request for management and configuration of the first security module, and the first interface is further used by the first security module to send a response to management and configuration of the first security module.

In a possible implementation, the second module communicates with the first module through a second interface, the second interface is configured to transmit a request and a response of the first security service, and the second interface is further configured to transmit a request and a response of the second module to management and configuration of the first module.

Optionally, the communication apparatus 1900 may perform an action performed by the requester in the foregoing method embodiments. The requester may be a terminal device, a network device, or a security module (a second security module), may be a chip or circuit in a terminal device, a network device, or a security module, or may be a logical module or software that can implement all or some functions of a terminal device, a network device, or a security module. This is not limited in this application.

Optionally, the communication apparatus 1900 may be a requester, the interface unit 1910 is configured to perform a receiving or sending operation of the requester in the foregoing method embodiments, and the processing unit 1920 is configured to perform an internal processing operation of the requester in the foregoing method embodiments.

Optionally, the communication apparatus 1900 may be a device including the requester. Alternatively, the communication apparatus 1900 may be a component configured in the requester, for example, a chip in the requester. In this case, the interface unit 1910 may be an interface circuit, a pin, or the like. Specifically, the interface circuit may include an input circuit and an output circuit, and the processing unit 1920 may include a processing circuit.

In a possible implementation, the interface unit 1910 is configured to send a first request message to a first security module, where the first request message is used to request the first security module to execute a first security service or manage the first security module, the first security service is used to call a security capability, the requester includes a first node, a second node, or a second security module, the first security module is a module serving the first node, and the second security module is a module serving the second node; and the interface unit 1910 is further configured to receive a first feedback message from the first security module, where the first feedback message is used to feed back, to a requester, an execution result of the first security service or a management result of the first security module.

In a possible implementation, the requester is the first node, and the first request message includes an identifier of the second node or management requirement information of the first node.

In a possible implementation, the requester is the second security module, and the first request message includes a security parameter or management target information of the first security module.

As shown in FIG. 20, an embodiment of this application further provides a communication apparatus 2000. The communication apparatus 2000 includes a processor 2010, the processor 2010 is coupled to a memory 2020, the memory 2020 is configured to store a computer program or instructions and/or data, and the processor 2010 is configured to execute the computer program or the instructions and/or the data stored in the memory 2020, so that methods in the foregoing method embodiments are performed.

Optionally, the communication apparatus 2000 includes one or more processors 2010.

Optionally, as shown in FIG. 20, the communication apparatus 2000 may further include the memory 2020.

Optionally, the communication apparatus 2000 may include one or more memories 2020.

Optionally, the memory 2020 and the processor 2010 may be integrated or separately disposed.

Optionally, as shown in FIG. 20, the communication apparatus 2000 may further include a transceiver 2030 and/or a communication interface, and the transceiver 2030 and/or the communication interface are/is configured to receive and/or send a signal. For example, the processor 2010 is configured to control the transceiver 2030 and/or the communication interface to receive and/or send the signal.

Optionally, a component that is in the transceiver 2030 and that is configured to implement a receiving function may be considered as a receiving module, and a component that is in the transceiver 2030 and that is configured to implement a sending function may be considered as a sending module. In other words, the transceiver 2030 includes a receiver and a sender. The transceiver may also be sometimes referred to as a transceiver machine, a transceiver module, a transceiver circuit, or the like. The receiver may also be sometimes referred to as a receiver machine, a receiving module, a receiver circuit, or the like. The sender may also be referred to as a transmitter machine, a transmitter, a transmitting module, a transmitting circuit, or the like.

In a solution, the communication apparatus 2000 is configured to implement an operation performed by the first security module in the foregoing method embodiments. For example, the processor 2010 is configured to implement an operation (for example, an operation in S1120) performed inside the first security module in the foregoing method embodiments, and the transceiver 2030 is configured to implement a receiving or sending operation (for example, an operation in S1110 or S1130) performed by the first security module in the foregoing method embodiments.

In another solution, the communication apparatus 2000 is configured to implement an operation performed by the requester in the foregoing method embodiments. For example, the transceiver 2030 is configured to implement a receiving or sending operation (for example, an operation in S1110 or S1130) performed by the requester in the foregoing method embodiments.

It should be noted that the foregoing method embodiments of this application may be applied to a processor, or implemented by a processor. The processor may be an integrated circuit chip, and has a signal processing capability. In an implementation process, steps in the foregoing method embodiments may be implemented by using a hardware integrated logic circuit in the processor or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component, and may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include but is not limited to these memories and any memory of another proper type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When functions are implemented in the form of a software function unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
executing, by a first security module, a first security service or managing the first security module based on a first request message sent by a requester, wherein the first security service is used to call a security capability, the requester comprises a first node, a second node, or a second security module, the first security module is a module serving the first node, and the second security module is a module serving the second node; and
sending, by the first security module, a first feedback message to the requester, wherein the first feedback message is used to feed back, to the requester, an execution result of the first security service or a management result of the first security module.

2. The method according to claim 1, wherein the requester is the first node, and the first request message comprises an identifier of the second node or management requirement information of the first node.

3. The method according to claim 1, wherein the requester is the second security module, and the first request message comprises a security parameter or management target information of the first security module.

4. The method according to any one of claims 1 to 3, wherein the first security module comprises a first module and/or a second module, the first module is configured to perform at least one of the following operations: calling a security algorithm, obtaining a security parameter, or requesting a second security service from the second security module, and the second module is configured to manage the first security service or the first module.

5. The method according to claim 1 or 2, wherein the first security module comprises a scheduling unit and a capability unit, and the first request message comprises the identifier of the second node; and the executing, by a first security module, a first security service comprises:
calling, by the scheduling unit, a security algorithm of the first security service and/or obtaining a parameter of the first security service based on the first request message through the capability unit.

6. The method according to claim 5, wherein the first security module further comprises an interface unit, and the method further comprises:
receiving, by the interface unit, the first request message from the requester, wherein the first request message comprises the first security service requested by the requester;
generating, by the interface unit, a first task queue based on the first request message, and sending the first task queue to the scheduling unit;
calling, by the scheduling unit, the security algorithm of the first security service and/or obtaining the parameter of the first security service based on the first task queue through the capability unit; and
sending, by the scheduling unit, an execution result to the interface unit.

7. The method according to any one of claims 1 to 3, wherein the first security module comprises a scheduling unit, a management unit, and a capability unit, and the first request message comprises the management requirement information of the first node or the management target information of the first security module; and the managing, by a first security module, the first security module comprises:
managing, by the management unit, the capability unit based on the first request message through the scheduling unit.

8. The method according to claim 7, wherein the first security module further comprises an interface unit, and the method further comprises:
receiving, by the interface unit, the first request message from the requester, and sending the first request message to the scheduling unit;
sending, by the scheduling unit, the first request message to the management unit;
managing, by the management unit, the capability unit based on the first request message through the scheduling unit;
modifying, by the management unit, a profile, and sending a management response message to the interface unit through the scheduling unit; and
sending, by the interface unit, the management response message to the requester, wherein the management response message is used to feed back a management result of the management request to the requester.

9. The method according to any one of claims 1 to 4, wherein when the first module serves the requester, the requester is a terminal device, and the first module is deployed in the requester, or the first module is deployed outside the requester.

10. The method according to any one of claims 1 to 4, wherein when the first module and/or the second module serve/serves the requester, the requester is an access network device, and the first module and/or the second module are/is deployed in the requester, or the first module and/or the second module are/is deployed outside the requester.

11. The method according to any one of claims 1 to 4, wherein when the first module and/or the second module serve/serves the requester, the requester is a core network device, and the first module and the second module are deployed as network functions of a core network.

12. The method according to any one of claims 1 to 4, wherein
the first security module communicates with the requester through a first interface, wherein the first interface is used by the requester to initiate a request for the first security service, and the first interface is further used by the first security module to send a response for executing the first security service; and
when the first security module serves the requester, the first interface is further used by the requester to initiate a request for management and configuration of the first security module, and the first interface is further used by the first security module to send a response to management and configuration of the first security module.

13. The method according to any one of claims 1 to 4, wherein
the second module communicates with the first module through a second interface, wherein the second interface is configured to transmit a request and a response of the first security service, and the second interface is further configured to transmit a request and a response of the second module to management and configuration of the first module.

14. A communication method, comprising:
sending, by a requester, a first request message to a first security module, wherein the first request message is used to request the first security module to execute a first security service or manage the first security module, the first security service is used to call a security capability, the requester comprises a first node, a second node, or a second security module, the first security module is a module serving the first node, and the second security module is a module serving the second node; and
receiving, by the requester, a first feedback message from the first security module, wherein the first feedback message is used to feed back, to the requester, an execution result of the first security service or a management result of the first security module.

15. The method according to claim 14, wherein the requester is the first node, and the first request message comprises an identifier of the second node or management requirement information of the first node.

16. The method according to claim 14, wherein the requester is the second security module, and the first request message comprises a security parameter or management target information of the first security module.

17. A communication apparatus, comprising:
a processing unit, configured to execute a first security service or manage a first security module based on a first request message sent by a requester, wherein the first security service is used to call a security capability, the requester comprises a first node, a second node, or a second security module, the first security module is a module serving the first node, and the second security module is a module serving the second node; and
an interface unit, configured to send a first feedback message to the requester, wherein the first feedback message is used to feed back, to the requester, an execution result of the first security service or a management result of the first security module.

18. The apparatus according to claim 17, wherein the requester is the first node, and the first request message comprises an identifier of the second node or management requirement information of the first node.

19. The apparatus according to claim 17, wherein the requester is the second security module, and the first request message comprises a security parameter or management target information of the first security module.

20. The communication apparatus according to any one of claims 17 to 19, wherein the first security module comprises a first module and/or a second module, the first module is configured to perform at least one of the following operations: calling a security algorithm, obtaining a security parameter, or requesting a second security service from the second security module, and the second module is configured to manage the first security service or the first module.

21. The communication apparatus according to claim 17 or 18, wherein the processing unit comprises a scheduling unit and a capability unit, the first request message comprises the identifier of the second node, and the scheduling unit is configured to call a security algorithm of the first security service and/or obtain a parameter of the first security service based on the first request message through the capability unit.

22. The communication apparatus according to claim 21, wherein the processing unit further comprises the capability unit; the interface unit is further configured to receive the first request message from the requester, wherein the first request message comprises the first security service requested by the requester; the interface unit is further configured to: generate a first task queue based on the first request message, and send the first task queue to the scheduling unit; the scheduling unit is specifically configured to call the security algorithm of the first security service and/or obtain the parameter of the first security service based on the first task queue through the capability unit; and the scheduling unit is further configured to send an execution result to the interface unit.

23. The communication apparatus according to any one of claims 17 to 19, wherein the processing unit comprises a scheduling unit, a management unit, and a capability unit, the first request message comprises the management requirement information of the first node or the management target information of the first security module, and the management unit is specifically configured to manage the capability unit based on the first request message through the scheduling unit.

24. The communication apparatus according to claim 23, wherein the interface unit is further configured to: receive the first request message from the requester, and send the first request message to the scheduling unit; the scheduling unit is further configured to send the first request message to the management unit; the management unit is further configured to manage the capability unit based on the first request message through the scheduling unit; the management unit is further configured to: modify a profile, and send a management response message to the interface unit through the scheduling unit; and the interface unit is further configured to send the management response message to the requester, wherein the management response message is used to feed back a management result of the management request to the requester.

25. The communication apparatus according to any one of claims 17 to 20, wherein when the first module serves the requester, the requester is a terminal device, and the first module is deployed in the requester, or the first module is deployed outside the requester.

26. The communication apparatus according to any one of claims 17 to 20, wherein when the first module and/or the second module serve/serves the requester, the requester is an access network device, and the first module and/or the second module are/is deployed in the requester, or the first module and/or the second module are/is deployed outside the requester.

27. The communication apparatus according to any one of claims 17 to 20, wherein when the first module and/or the second module serve/serves the requester, the requester is a core network device, and the first module and the second module are deployed as network functions of a core network.

28. The communication apparatus according to any one of claims 17 to 20, wherein the first security module communicates with the requester through a first interface, wherein the first interface is used by the requester to initiate a request for the first security service, and the first interface is further used by the first security module to send a response for executing the first security service; and
when the first security module serves the requester, the first interface is further used by the requester to initiate a request for management and configuration of the first security module, and the first interface is further used by the first security module to send a response to management and configuration of the first security module.

29. The communication apparatus according to any one of claims 17 to 20, wherein the second module communicates with the first module through a second interface, wherein the second interface is configured to transmit a request and a response of the first security service, and the second interface is further configured to transmit a request and a response of the second module to management and configuration of the first module.

30. A communication apparatus, comprising:
an interface unit, configured to send a first request message to a first security module, wherein the first request message is used to request the first security module to execute a first security service or manage the first security module, the first security service is used to call a security capability, the requester comprises a first node, a second node, or a second security module, the first security module is a module serving the first node, and the second security module is a module serving the second node; and
the interface unit is further configured to receive a first feedback message from the first security module, wherein the first feedback message is used to feed back, to the requester, an execution result of the first security service or a management result of the first security module.

31. The apparatus according to claim 30, wherein the requester is the first node, and the first request message comprises an identifier of the second node or management requirement information of the first node.

32. The apparatus according to claim 30, wherein the requester is the second security module, and the first request message comprises a security parameter or management target information of the first security module.

33. A communication apparatus, comprising:
a processor, configured to execute a computer program stored in a memory, to enable the communication apparatus to perform the communication method according to any one of claims 1 to 16.

34. A computer-readable storage medium, wherein the computer-readable storage medium stores a computer program, and when the computer program is run on a computer, the computer is enabled to perform the communication method according to any one of claims 1 to 16.

35. A chip system, comprising a processor, configured to: invoke a computer program from a memory, and run the computer program, to enable a communication device on which the chip system is installed to perform the communication method according to any one of claims 1 to 16.
